(19) **Europäisches Patentamt European Patent Office Office européen des brevets**

(11) **EP 4 261 583 B1**

(12) **EUROPEAN PATENT SPECIFICATION**

(45) Date of publication and mention
of the grant of the patent:
**08.07.2026 Bulletin 2026/28**

(21) Application number: **21903880.9**

(22) Date of filing: **09.12.2021**

(51) International Patent Classification (IPC):
**G02B 13/00** *(2006.01)* **G02B 9/64** *(2006.01)*

(52) Cooperative Patent Classification (CPC):
**G02B 9/64; G02B 13/0045; G02B 13/0065**

(86) International application number:
**PCT/KR2021/018686**

(87) International publication number:
**WO 2022/124835 (16.06.2022 Gazette 2022/24)**

(54) **OPTICAL SYSTEM**

OPTISCHES SYSTEM

SYSTÈME OPTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.12.2020 KR 20200171691**

(43) Date of publication of application:
**18.10.2023 Bulletin 2023/42**

(73) Proprietor: **LG Innotek Co., Ltd.
Seoul 07796 (KR)**

(72) Inventor: **KWON, Duk Keun
Seoul 07796 (KR)**

(74) Representative: **M. Zardi & Co S.A.
Via G. B. Pioda, 6
6900 Lugano (CH)**

(56) References cited:
**CN-A- 111 929 831        CN-A- 111 929 831
CN-A- 112 014 953        JP-A- 2020 064 173
JP-A- 2020 139 966        JP-A- 2020 144 314
KR-A- 20160 075 235      TW-B- I 684 807
US-A1- 2020 393 653**

**Description**

[Technical Field]

The embodiment relates to an optical system for high resolution.

[Background Art]

The camera module captures an object and stores it as an image or video, and is installed in various applications. In particular, the camera module is produced in a very small size and is applied to not only portable devices such as smartphones, tablet PCs, and laptops, but also drones and vehicles to provide various functions. For example, the optical system of the camera module may include an imaging lens for forming an image, and an image sensor for converting the formed image into an electrical signal. In this case, the camera module may perform an autofocus (AF) function of aligning the focal lengths of the lenses by automatically adjusting the distance between the image sensor and the imaging lens, and may perform a zooning function of zooming up or zooning out by increasing or decreasing the magnification of a remote object through a zoom lens. In addition, the camera module employs an image stabilization (IS) technology to correct or prevent image stabilization due to an unstable fixing device or a camera movement caused by a user's movement. The most important element for this camera module to obtain an image is an imaging lens that forms an image. Recently, interest in high performance such as high image quality and high resolution is increasing, and research on an optical system including 5 or 6 lenses is being conducted in order to realize this. For example, research using a plurality of imaging lenses having positive (+) and/or negative (-) refractive power to implement a high-performance optical system is being conducted. However, when arranging a plurality of lenses, there is a problem in that it is difficult to derive excellent optical properties and aberration properties. Therefore, a new optical system capable of solving the above-described problem is required. TWI684807B discloses an optical lens system and an image capturing device suitable for electronic devices. CN111929831A discloses camera shooting optical lens comprising nine lenses, wherein the nine lenses are sequentially afirst lens with positive refractive power, a second lens with positive refractive power, a third lens, a fourth lens, a fifth lens, a sixth lens with positive refractive power, a seventh lens with negative refractive power, an eighth lens with positive refractive power and a ninth lens with negative refractive power from the object side to the image side. CN112014953A discloses a camera shooting optical lens comprising nine lenses in total, wherein the nine-piece lens sequentially arranged from an object side to an image side comprise a first lens having negative refractive power, a second lens having positive refractive power, a third lens having, a fourth lens having negative refractive power, a fifth lens, a sixth lens having positive refractive power, a seventh lens having negative refractive power, an eighth lens having positive refractive power and a ninth lens having negative refractive power.

[Disclosure]

[Technical Problem]

An embodiment of the invention is to provide an optical system with improved optical properties. An embodiment of the invention is to provide an optical system having at least nine lenses. An embodiment of the invention is to provide an optical system in which at least two lenses having positive (+) refractive power and at least two lenses having negative (-) refractive power are aligned with respect to an optical axis among at least nine lenses.

[Technical Solution]

The invention is defined in the appended claims. An optical system according to the invention is defined in appended claim 1. The Abbe numbers of the first, second, fifth, seventh, and ninth lenses may be 50 or more, and the Abbe numbers of the third and sixth lenses may be less than 30. At least one of the first lens, the fourth lens, the fifth lens, the sixth lens, and the seventh lens may have positive or negative refractive power.

An optical system according to an embodiment of the invention includes an image sensor on the sensor side of the ninth lens; and an optical filter between the image sensor and the ninth lens, and wherein the optical system satisfies Equations 1 and 2: [Equation 1] $0 < BFL/TTL < 0.3$ and [Equation 2] $0 < BFL/Img < 0.3$, where BFL is a distance from an apex or center of the sensor-side surface of the ninth lens to the image sensor, TTL is a distance from an apex or center of the object-side first surface of the first lens to the image sensor, and Img may be a vertical distance from the optical axis to 1.0F, which is a diagonal end on the image sensor.

According to an embodiment of the invention, an image sensor on a sensor side of the ninth lens and an optical filter between the image sensor and the ninth lens are included, and the optical system satisfies Equations 3, 4 and 5: [Equation 3] $0.5 < F/TTL < 1.2$, [Equation 4] $0.5 < TTL/(Img \times 2) < 0.8$, and [Equation 5] $0.5 < TTL/(D92 \times 2) < 1.2$, where TTL

is a distance from a center of an object-side first surface to the image sensor, F is a total effective focal length of the optical system, Img is a vertical distance from the optical axis to 1.0F, which is a diagonal end on the image sensor, and D92 may be a distance from a center of the sensor-side surface of the ninth to an end of effective region.

According to an embodiment of the invention, wherein a radius of curvature of the object-side surface of the second lens is L2R1 and an absolute value of a radius of curvature of the sensor-side surface of the second lens is defined as |L2R2|, and the following relation may be satisfied: 0 < L2R1/| L2R2| < 0.5.

According to an embodiment of the invention, wherein an absolute value of the radius of curvature of the object-side surface of the third lens is |L3R1| and a radius of curvature of the sensor-side surface of the second lens is L3R2, and the following relation may be satisfied: < L3R2/|L3R1| < 1.

According to an embodiment of the invention, wherein a refractive index of the second lens at 587 nm is G2 and a refractive index of the third lens at 587 nm is G3, the following relation may be satisfied: 0.7 < G2/G3 < 1.2.

According to an embodiment of the invention, wherein a center thickness of the first lens is T1, the center thickness of the second lens is T2, and the center thickness of the third lens is T3, and the following relation may be satisfied: 0.2 < T3/T2 < 1 and 0.2 < T1/T2 < 1.

An optical system according to an embodiment of the invention includes a first lens, a second lens, a third lens, a fourth lens, a fifth lens, a sixth lens, a seventh lens, an eighth lens and a ninth lens which are sequentially arranged along an optical axis in a direction from an object side to a sensor side, wherein the first lens has positive or negative refractive power and has an convex object-side surface and a concave sensor-side surface, the second lens has positive refractive power and has a convex object-side surface and a convex sensor-side surface, the third lens has negative refractive power, the sensor-side surface is concave, and the eighth lens has positive refractive power and has at least one of an object-side surface and a sensor-side surface having at least one inflection point, the ninth lens has negative refractive power, an object-side surface and a sensor-side surface of the ninth lens have at least one inflection point, and a center thickness of the second lens is thicker than a center thickness of each of the first, third to ninth lenses, an edge of the object-side surface of the eighth lens protrudes toward the first lens than a center on the optical axis of the object-side surface of the eighth lens, and a straight line connecting edges of the seventh lens may be the same as a straight line orthogonal to the optical axis in a middle between an object-side surface and a sensor-side surface of the seventh lens, or may be located closer to the first lens.

According to an embodiment of the invention, a straight line connecting edges of the object-side surface of the eighth lens may be located closer to the first lens than a straight line orthogonal to the optical axis at a center of the object-side surface of the seventh lens.

According to an embodiment of the invention, an interval between the third lens and the fourth lens along the optical axis is greater than a first interval between the first lens and the second lens, and a second interval between the eighth lens and the ninth lens along the optical axis may be greater than the first interval. The first interval and the second interval may be 0.4 mm or more. A center thickness of the second lens may be in a range of 2 to 4 times a center thickness of the third lens.

[Advantageous Effects]

The optical system according to the embodiment may correct aberration characteristics and implement a slim optical system. Accordingly, the optical system may be miniaturized and high quality and high resolution can be realized. The optical system according to the embodiment may block unnecessary light entering the optical system. Accordingly, it is possible to improve the performance of the optical system by reducing aberration.

[Description of Drawings]

FIG. 1 is a block diagram of an optical system according to a first embodiment of the invention.

FIG. 2 is a block diagram of an optical system according to a second embodiment of the invention.

FIG. 3 is a block diagram of an optical system according to a third embodiment of the invention.

FIG. 4 is a diagram illustrating the relationship between the edge side of the eighth lens and the seventh lens in the first to third embodiments of the invention.

FIG. 5 is an example in which the reflective member is disposed on the incident side of the optical system according to the first to third embodiments of the invention.

FIG. 6(A)(B)(C) are graphs showing longitudinal spherical aberration, astigmatic field curves, and distortion in the optical system of FIG. 1.

FIG. 7 is a diagram illustrating a distortion grid in the optical system of FIG. 1.

FIG. 8 is analysis graphs showing lateral aberration in the region where the relative field height on the optical axis is 0.0 to 1.0 in the tangential field curvature and the sagittal field curvature of the optical system of FIG. 1.

FIG. 9(A)(B)(C) are graphs showing longitudinal spherical aberration, astigmatic field curves, and distortion aberration in the optical system of FIG. 2.

FIG. 10 is a diagram illustrating a distortion grid in the optical system of FIG. 2.

FIG. 11 is analysis graphs showing lateral aberration in the region where the relative field height on the optical axis is 0.0 to 1.0 in the tangential field curvature and the sagittal field curvature of the optical system of FIG. 2.

FIG. 12(A)(B)(C) are graphs showing longitudinal spherical aberration, astigmatic field curves, and distortion in the optical system of FIG. 3.

FIG. 13 is a diagram illustrating a distortion grid in the optical system of FIG. 3.

FIG. 14 is analysis graphs showing lateral aberration in the region where the relative field height on the optical axis is 0.0 to 1.0 in the tangential field curvature and the sagittal field curvature of the optical system of FIG. 3.

FIG. 15 is a perspective view of a mobile terminal having an optical system according to an embodiment of the invention.

[Best Mode]

Hereinafter, preferred embodiments of the invention will be described in detail with reference to the accompanying drawings. In addition, the terms (including technical and scientific terms) used in the embodiments of the invention, unless specifically defined and described explicitly, may be interpreted in a meaning that may be generally understood by those having ordinary skill in the art to which the invention pertains, and terms that are commonly used such as terms defined in a dictionary should be able to interpret their meanings in consideration of the contextual meaning of the relevant technology. Further, the terms used in the embodiments of the invention are for explaining the embodiments and are not intended to limit the invention. In this specification, the singular forms also may include plural forms unless otherwise specifically stated in a phrase, and in the case in which at least one (or one or more) of A and (and) B, C is stated, it may include one or more of all combinations that may be combined with A, B, and C. In describing the components of the embodiments of the invention, terms such as first, second, A, B, (a), and (b) may be used. Such terms are only for distinguishing the component from other component, and may not be determined by the term by the nature, sequence or procedure etc. of the corresponding constituent element. And when it is described that a component is "connected ", "coupled" or "joined" to another component, the description may include not only being directly connected, coupled or joined to the other component but also being "connected ", "coupled" or "joined" by another component between the component and the other component. In addition, in the case of being described as being formed or disposed "above (on)" or "below (under)" of each component, the description includes not only when two components are in direct contact with each other, but also when one or more other components are formed or disposed between the two components. In addition, when expressed as "above (on)" or "below (under)", it may refer to a downward direction as well as an upward direction with respect to one element.

In the description of the invention, the first lens means the lens closest to the object side among the plurality of lenses aligned with the optical axis, and the last lens means the lens closest to the image side (or sensor side) among the plurality of lenses aligned with the optical axis. In the description of the invention, all measures for the radius, effective diameter, thickness, distance, BFL (Back Focal Length), TTL (Total Track Length or Total Top Length), etc. of the lens are mm unless otherwise specified. In the present specification, the shape of the lens is shown based on the optical axis of the lens. For example, that the object-side or sensor-side surface of the lens is convex means that the optical axis vicinity is convex on the object-side or sensor-side surface of the lens, but does not mean that the optical axis periphery is convex. Accordingly, even when the object-side or sensor-side surface of the lens is described as being convex, the portion around the optical axis on the object-side or sensor-side surface of the lens may be concave. That the object-side or sensor-side surface of the lens is concave means that the vicinity of the optical axis is concave on the object-side or sensor-side surface of the lens, but does not mean that the periphery of the optical axis is concave. Accordingly, even when the object-side or sensor-side surface of the lens is described as being concave, the portion around the optical axis on the object-side or sensor-side surface of the lens may be convex. In the present specification, it should be noted that the thickness and radius of curvature of the lens are measured based on the optical axis of the lens. In addition, "object-side surface" may mean the surface of the lens facing the object side with respect to the optical axis, and "image side" may mean the surface of the lens facing the imaging surface with respect to the optical axis.

An optical system according to an embodiment of the invention may include a plurality of lenses. In detail, the optical system according to the first to third embodiments may include at least nine lenses. As the resolution progresses, the size of the image sensor also increases, and the number of lenses gradually increases according to the resolution of the image sensor. An embodiment of the invention is to provide a high-resolution optical system using at least nine lenses.

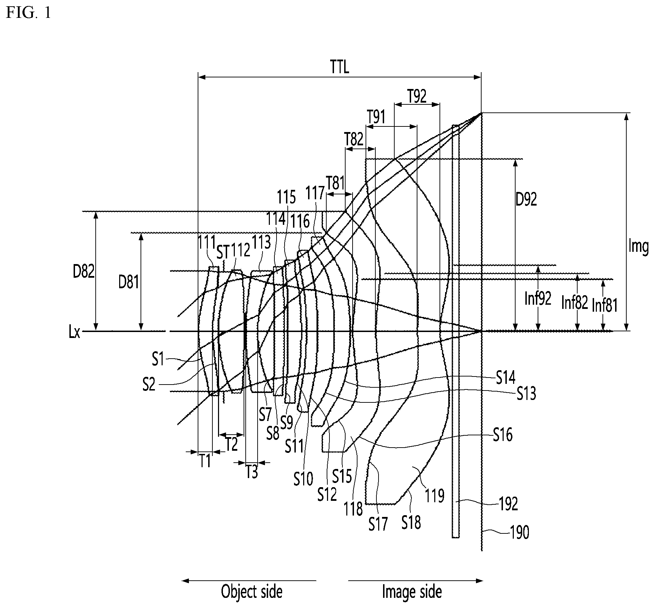

Referring to FIGS. 1 to 3, the optical systems of the first to third embodiments may include, for example, a first lens 111, a second lens 112, and a third lens 113, a fourth lens 114, a fifth lens 115, a sixth lens 116, a seventh lens 117, an eighth lens 118, and a ninth lens 119 sequentially arranged from the object side to the image side. The optical system may include an optical filter 192 and an image sensor 190. The optical system having the plurality of lenses 111-119 may be defined as a lens optical system, and the optical system further including the lenses 111-119, the optical filter 192 and the image sensor 192 may be defined as a camera module. The camera module may include a circuit board, at least one lens holder supporting at least one lens or two or more lenses, and one or a plurality of driving members for moving the lens holders in an optical axis direction and/or a direction perpendicular to the optical axis.

The first to ninth lenses 111, 112, 113, 114, 115, 116, 117, 118 and 119 may be sequentially disposed along the optical axis Lx of the optical system. The light corresponding to the image information of the object passes through the first lens 111, the second lens 112, the third lens 113, the fourth lens 114, the fifth lens 115, and the sixth lens 116, the seventh lens 117, the eighth lens 118 and the ninth lens 119, passes through the optical filter 192 to focus on the image sensor 190, and may be obtained as an electrical signal.

Each of the first to ninth lenses 111, 112, 113, 114, 115, 116, 117, 118 and 119 may include an effective region and an ineffective region. The effective region may be a region through which light incident on each lens passes. That is, the effective region may be a region in which incident light is refracted to realize optical properties. The ineffective region may be disposed around the effective region. The ineffective region may be a region to which the light is not incident. That is, the ineffective region may be a region independent of optical characteristics of the optical system. In addition, the ineffective region may be a region fixed to a barrel (not shown) for accommodating the lens, or a region in which light is blocked by a light blocking unit or a spacer.

At least one or two or more of the first to ninth lenses 111, 112, 113, 114, 115, 116, 117, 118, 119, or at least one or two or more of the fifth to ninth lenses may have a length in a first direction orthogonal to the optical axis Lx that is smaller than an effective radius in a second direction. Such lens(s) may be provided in a non-circular shape having a diameter in the second direction and a distance smaller than the diameter in the first direction.

The optical system according to FIGS. 1 to 3 may include an aperture stop ST for adjusting the amount of incident light. The aperture stop ST may be disposed between two lenses selected from among the first to ninth lenses 111, 112, 113, 114, 115, 116, 117, 118 and 119. For example, the aperture stop ST may be disposed on the outer periphery between the first lens 111 and the second lens 112 or on the outer periphery between the second lens 112 and the third lens 113. The aperture stop ST may be disposed closer to the sensor side (or the emission surface) of the first lens 111 than the fourth lens 114.

As another example, at least one of the first to ninth lenses 111, 112, 113, 114, 115, 116, 117, 118 and 119 may serve as an aperture. For example, one selected from among the lens surfaces of the first to ninth lenses 111, 112, 113, 114, 115, 116, 117, 118 and 119 may serve as an aperture for controlling the amount of light. For example, the perimeter of the sensor-side surface of the first lens 111 or the perimeter of the object side of the second lens 112 may serve as an aperture.

Referring to FIGS. 1 to 3, in the optical system, the first lens 111 may have positive (+) or negative (-) refractive power. The first lens 111 may include a plastic material. The first lens 111 may include a first surface S1 defined as an object-side surface and a second surface S2 defined as a sensor-side surface. The first surface S1 is convex and the second surface S2 may be concave. That is, the first lens 111 may have a meniscus shape convex toward the object side. At least one or both of the first surface S1 and the second surface S2 of the first lens 111 may be aspherical. At least one of the first surface S1 and the second surface S2 may have an inflection point.

The second lens 112 has positive (+) refractive power. The second lens 112 may include a plastic or glass material. The second lens 112 may include a third surface S3 defined as an object-side surface and a fourth surface S4 defined as a sensor-side surface. The third surface S3 is convex and the fourth surface S4 may be convex. That is, the second lens 112 may have a shape in which both surfaces are convex. As another example, the third surface S3 may be convex and the fourth surface S4 may be infinity or concave. At least one of the third surface S3 and the fourth surface S4 may be a spherical surface or an aspherical surface. For example, both the third surface S3 and the fourth surface S4 may be aspherical. The size of the effective diameter of the object-side surface or the sensor-side surface of the first lens 111 may be greater than the size of the effective diameter of the object-side surface or the sensor-side surface of the second lens 112 or the third lens 113. Here, the effective diameter may be the diameter of the effective region of the object-side surface or the sensor-side surface on which light is incident. Here, the center thickness of the second lens 112 may be 2 to 4 times greater than the center thickness of each of the third, fourth, and sixth lenses 113, 114, and 116.

The third lens 113 has negative (-) refractive power. The third lens 113 may include a plastic or glass material. The third lens 113 may include a fifth surface S5 defined as an object-side surface and a sixth surface S6 defined as a sensor-side surface. The fifth surface S5 may be convex and the sixth surface S6 is concave. That is, the third lens 113 may have a meniscus shape convex toward the object side. As another example, the fifth surface S5 may be infinity or concave. At least one of the fifth surface S5 and the sixth surface S6 may be a spherical surface or an aspherical surface. For example, both the fifth surface S5 and the sixth surface S6 may be aspherical.

The fourth lens 114 may have positive (+) or negative (-) refractive power. The fourth lens 114 may include a plastic or glass material. The fourth lens 114 may include a seventh surface S7 defined as an object-side surface and an eighth surface S8 defined as a sensor-side surface. The seventh surface S7 may be concave and the eighth surface S8 may be convex. That is, the fourth lens 114 may have a meniscus shape convex toward the image side. Alternatively, the seventh surface S7 may be infinity. At least one or both of the seventh surface S7 and the eighth surface S8 may be aspherical.

The fifth lens 115 may have positive (+) or negative (-) refractive power. The fifth lens 115 may include a plastic or glass material. The fifth lens 115 may include a ninth surface S9 defined as an object-side surface and a tenth surface S10 defined as a sensor-side surface. The ninth surface S9 may be concave, and the tenth surface S10 may be convex. That is, the fifth lens 115 may have a meniscus shape convex toward the image side. Alternatively, the ninth surface S9 may be infinity. At least one or both of the ninth surface S9 and the tenth surface S10 may be aspherical.

The sixth lens 116 may have positive (+) or negative (-) refractive power. The sixth lens 116 may include a plastic or glass material. The sixth lens 116 may include an eleventh surface S11 defined as an object-side surface and a twelfth surface S12 defined as a sensor-side surface. The eleventh surface S11 may be concave and the twelfth surface S12 may be convex. That is, the sixth lens 116 may have a meniscus shape convex toward the image side. At least one or both of the eleventh surface S11 and the twelfth surface S12 may be aspherical. At least one of the eleventh surface S11 and the twelfth surface S12 may have an inflection point. The radius of curvature at the center of the eleventh surface S11 of the sixth lens 116 may be greater than the radius of curvature at the center of the thirteenth surface S13 of the seventh lens 117. Here, the effective diameters of the fourth, fifth, and sixth lenses 114, 115, and 116 gradually increase from the object side to the sensor side, for example, the effective diameter of the sensor-side sixth lens 116 may be greater than the effective diameter of the object-side third lens 113.

The seventh lens 117 may have positive (+) or negative (-) refractive power. The seventh lens 117 may include a plastic or glass material. The seventh lens 117 may include a thirteenth surface S13 defined as an object-side surface and a fourteenth surface S14 defined as a sensor-side surface. The thirteenth surface S13 may be concave and the fourteenth surface S14 may be convex. That is, the seventh lens 117 may have a meniscus shape convex toward the image side. At least one or both of the thirteenth surface S13 and the fourteenth surface S14 may be aspherical. At least one of the thirteenth surface S13 and the fourteenth surface S14 may have an inflection point. The radius of curvature at the center of the thirteenth surface S13 of the seventh lens 117 may be smaller than the radius of curvature at the center of the object-side surfaces S5, S7, and S9 of the third, fourth, and fifth lenses 113, 114, and 115. The radius of curvature at the center of the seventeenth surface S14 of the seventh lens 117 may be smaller than the radius of curvature at the center of the sensor-side surfaces S6, S8, and S10 of the third, fourth, and fifth lenses 113, 114, and 115. Here, the effective diameter of the seventh lens 117 may be greater than the effective diameter of the first to sixth lenses 111, 112, 113, 114, 115 and 116.

The eighth lens 118 has positive (+) refractive power. The eighth lens 118 may include a plastic material. The eighth lens 118 may include a fifteenth surface S15 defined as an object-side surface and a sixteenth surface S16 defined as a sensor-side surface. On the optical axis, the fifteenth surface S15 may be convex and the sixteenth surface S16 may be concave. The fifteenth surface S15 and the sixteenth surface S16 may be aspherical. At least one or both of the fifteenth surface S15 and the sixteenth surface S16 has at least one inflection point. In detail, the fifteenth surface S15 may have an inflection point around the center, and a distance inf81 from the optical axis Lx to the inflection point may be disposed at a position of about 40% to about 60% from the optical axis Lx as a reference to the edge of the eighth lens 118 as the end point. Here, a distance inf82 of the inflection point on the fifteenth surface S15 may be a position set based on the vertical direction of the optical axis Lx. The position of the inflection point of the sixteenth surface S16 may be disposed closer to the edge than the position of the inflection point of the fifteenth surface S15. That is, the distance inf82>inf81 from the optical axis Lx to the inflection point may be satisfied.

The ninth lens 119 has negative (-) refractive power. The ninth lens 119 may include a plastic material. The ninth lens 119 may include a seventeenth surface S17 defined as an object-side surface and an eighteenth surface S18 defined as a sensor-side surface. On the optical axis, the seventeenth surface S17 may be convex and the eighteenth surface S18 may be concave. The seventeenth surface S17 and the eighteenth surface S18 may be aspherical. Each of the seventeenth surface S17 and the eighteenth surface S18 has at least one inflection point. At least one or both of the seventeenth surface S17 and the eighteenth surface S18 may have an inflection point. In detail, the seventeenth surface S17 may have an inflection point around the center, and the inflection point may be in a position of about 15% to 50% from the optical axis Lx as the starting point to the edge of the ninth lens 109 as the endpoint. Here, the position of the inflection point on the eighteenth surface S18 may be located at a distance inf92 with respect to the vertical direction of the optical axis Lx. The distance inf92 from the optical axis to the inflection point of the eighteenth surface S18 may be greater than the distances inf81 and inf82 to the inflection point of the eighth lens 118, and the inflection point of the eighteenth surface S18 may be disposed closer to the edge than the inflection point location of the seventeenth surface S17.

Here, when comparing the linear distance from the eighth lens 118 and the ninth lens 119 to the end of the effective region with respect to the optical axis Lx, that is, the effective radius, the condition of D81<D82<D92 may be satisfied. D81 is the linear distance from the optical axis to the end of the effective region of the fifteenth surface S15 of the eighth lens 118, and D82 is the distance from the optical axis to the end of the effective region of the sixteenth surface S16 of the eighth lens 118, D92 is a linear distance from the optical axis to the end of the effective region of the eighteenth surface S18 of the ninth lens 119. Accordingly, the light incident from the eighth lens 118 may be refracted further outward with respect to the optical axis. When the optical axis Lx distance from the eighth lens 118 and the ninth lens 119 to the end of the effective region is compared, the condition of D81<D82<D92<D91 may be satisfied. D81 is a distance from the center (optical axis position) of the fifteenth surface S15 of the eighth lens 118 to the end of the effective region in the optical axis direction, D82 is a distance from the center (optical axis position) of the sixteenth surface S16 to the end of the effective region in the optical axis direction, D91 is a distance from the center (optical axis position) of the seventeenth surface S17 of the ninth lens 119 in the optical axis direction, and D92 is a distance from the center (optical axis position) of the eighteenth surface S18 to the end of the effective region in the optical axis direction.

The optical filter 192 may include at least one of an infrared filter and an optical filter such as a cover glass. The optical filter 192 may pass light of a set wavelength band and filter light of a different wavelength band. When the optical filter 192 includes an infrared filter, radiant heat emitted from external light may be blocked from being transmitted to the image sensor. In addition, the optical filter 192 may transmit visible light and reflect infrared light. The image sensor 190 may detect light. The image sensor 190 may include a charge coupled device (CCD) or a complementary metal oxide semiconductor (CMOS), or the like.

The total length (TTL) of the optical system may be provided in the range of 7 mm or more, for example, 7 mm to 12 mm or 8 mm to 11.5 mm. The TTL is a distance from the center of the object-side surface of the first lens 111 to the image sensor 190. The distance BFL from the center of the sensor-side eighteenth surface S18 of the ninth lens 119 to the image sensor 190 may be 1 mm or more, for example, in a range of 1 mm to 2 mm or 1 mm to 1.7 mm. The vertical distance Img from the optical axis of the image sensor 190 to 1.0 field may be 6 mm or more, for example, in a range of 6 mm to 10 mm or 6.5 mm to 9 mm. The total focal length F of the optical system may be in the range of 5 mm or more, for example, 5 mm to 9 mm or 6 mm to 8.2 mm.

In the optical system of the first to third embodiments, all of the first to eighteenth surfaces S1 to S18 of the first to ninth lenses 111, 112, 113, 114, 115, 116, 117, 118 and 119 may be aspherical. A radius of curvature of the ninth surface S9 may have the largest in each radius of curvature (changed to an absolute value) of the first to eighteenth surfaces S1-S18 about the optical axis, and the radius of curvature of the eighteenth surface S18 may be the smallest, and the radius of curvature of the seventh surface S7 or the eighth surface S8 may be the second largest.

Among the first to eighteenth surfaces S1-S18 of the first to ninth lenses 111, 112, 113, 114, 115, 116, 117, 118, and 119, the number of lenses having a convex object-side surface on the optical axis is four or more, and the number of lenses having a concave object-side surface is four or more, The number of lenses having a convex sensor-side surface may be five or more, and the number of lenses having a concave sensor-side surface may be four or more. Looking at the Abbe numbers of the first to ninth lenses 111, 112, 113, 114, 115, 116, 117, 118, and 119, the number of lenses having an Abbe number of 50 or more are six or more, and the number of lenses having an Abbe number of less than 50 may be three or less. For example, the Abbe number of the first lens 111, the second lens 112, the fourth lens 114, the fifth lens 115, the seventh lens 117, and the ninth lens 119 may be 50 or more, the Abbe number of the third lens 113 and the sixth lens 116 may be 30 or less, and the Abbe number of the eighth lens 118 may be less than 35 and greater than 20. Looking at the refractive indices of the first to ninth lenses 111, 112, 113, 114, 115, 116, 117, 118, and 119, the number of lenses having a refractive index of 1.6 or more at 587 nm are three or more, and the number of lenses having a refractive index of less than 1.6 may be six or less. For example, the third lens 113, the sixth lens 116, and the eighth lens 118 at 587 nm are 1.6 or more, and the first and second lenses 111 and 112, the fourth and fifth lenses 114 and 115, and the seventh and ninth lenses 117 and 119 may be less than 1.6. The refractive index of the third lens 113 and the sixth lens 116 has the largest refractive index among the refractive indices of the lenses, and may be 1.65 or more.

Looking at the thickness of the center of the first to ninth lenses 111, 112, 113, 114, 115, 116, 117, 118, and 119, the number of lenses having a center thickness of 0.6 mm or more is three or more, and the number of lenses having a center thickness of less than 0.6 mm may be six or less. For example, the thicknesses T1, T2, and T3 of the centers of the first to third lenses 11, 112, and 113 may satisfy the condition of T3<T1<T2, and the thicknesses T4, T5, and T6 of the centers of the fourth to sixth lenses 114, 115, and 116 may satisfy the condition of T4≤T6≤T3<T5, the thickness of the center of the third and fourth lenses 113 and 114 satisfies T4<T3, and the thicknesses T7, T8, and T9 of the centers of the seventh to ninth lenses 117, 118, and 119 satisfy the condition of T3<T7<T9<T8. Here, T1 to T9 are the thicknesses of the respective centers of the first to ninth lenses 111-119.

In the first to ninth lenses 111, 112, 113, 114, 115, 116, 117, 118, and 119, the interval on the optical axis between two adjacent lenses is satisfied the relation: T67≤T34<T89, T67 is the optical axis interval between the adjacent sixth and seventh lenses 116,117, and T34 is the optical axis interval between the adjacent third and fourth lenses 113 and 114, and T89 is the optical axis interval between the adjacent eighth and ninth lenses 118 and 119. Here, T34 is 0.4 mm or more, larger than the optical axis interval between the first and second lenses 111 and 112, T89 may be thicker than the thickness of the center of the second lens 112 and may be greater than the sum of the thicknesses of the centers of the first and second lenses 111 and 112, and may be in the range of 1 mm or more, for example, 1 mm to 2 mm. Also, looking at the interval between the eighth lens 118 and the ninth lens 119, the optical axis interval between two adjacent centers on the optical axis may be greater than the interval between two adjacent peripheral portions.

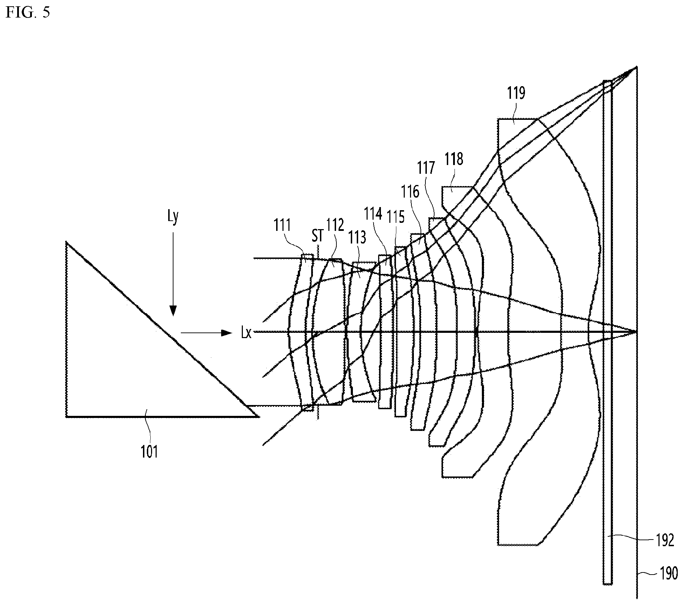

As shown in FIG. 5, in the optical system, the reflective member 101 may be disposed on the incident side of the first lens 111. The reflective member 101 may reflect the light incident through the optical axis Ly orthogonal to the optical axis Lx of the first lens 111 to the ninth lens 119 to the first lens 111. The reflective member 101 may include a prism, that is, a triangular or right-angled prism.

Table 1 is a value showing data of the radius of curvature, thickness, interval, refractive index, and Abbe's number of the surface of each lens of the first embodiment.

[Table 1]

| Lens | Surface | Radius (mm) of curvature | thickness(mm)/ Interval(mm) | Index | Abbe # |
|---|---|---|---|---|---|
| Lens 1 | S1 | 3.699 | 0.459 | 1.5343 | 55.656 |
| | S2 | 4.800 | 0.342 | | |
| Aperture | Stop | Infinity | -0.162 | | |
| Lens 2 | S3 | 4.648 | 0.841 | 1.5343 | 55.656 |
| | S4 | -34.791 | 0.050 | | |
| Lens 3 | S5 | 6.828 | 0.393 | 1.6714 | 19.238 |
| | S6 | 3.925 | 0.554 | | |
| Lens 4 | S7 | -45.229 | 0.312 | 1.5343 | 55.656 |
| | S8 | -46.241 | 0.115 | | |
| Lens 5 | S9 | 1921.124 | 0.446 | 1.5343 | 55.656 |
| | S10 | -9.809 | 0.168 | | |
| Lens 6 | S11 | -9.469 | 0.355 | 1.6714 | 19.238 |
| | S12 | -22.120 | 0.553 | | |
| Lens 7 | S13 | -11.374 | 0.505 | 1.5343 | 55.656 |
| | S14 | -10.277 | 0.092 | | |
| Lens 8 | S15 | 5.061 | 0.760 | 1.6142 | 25.592 |
| | S16 | 7.572 | 1.358 | | |
| Lens 9 | S17 | 7.520 | 0.722 | 1.5343 | 55.656 |
| | S18 | 2.557 | 0.400 | | |
| Optical filter | S19 | Infinity | 0.210 | 1.5168 | 64.167 |
| | S20 | Infinity | 0.738 | | |

In Table 1, the thickness is the thickness (mm) of the center of each lens, and the interval is the distance (mm) between two adjacent lenses. S19 denotes the incident side surface of the optical filter, and S20 denotes the exit surface of the optical filter. Table 2 shows values showing the aspheric coefficients of the surfaces of each lens of FIG. 1.

[Table 2]

| surface | K | A | B | C | D | E | F | G | H | J |
|---|---|---|---|---|---|---|---|---|---|---|
| S1 | -3.78 4941 24 | 0.000 31235 2 | -0.003 43436 | 0.001 38907 7 | -0.0012 0178 | 0.000 59387 9 | -0.000 16469 | 2.82E-05 | -2.89E-06 | 1.35E-07 |
| S2 | -29.7 0793 27 | 0.019 16449 2 | -0.021 78221 | 0.011 93307 2 | -0.0063 8043 | 0.003 02414 | -0.000 99341 | 0.0002 03277 | -2.34E-05 | 1.16E-06 |
| S3 | -21.9 5602 23 | 0.025 49951 4 | -0.012 42053 | 0.004 32906 9 | -0.0004 458 | -0.000 29849 | 0.000 24797 7 | -9.21E-05 | 1.68E-05 | -1.22E-06 |
| S4 | 0 | 0.001 75419 9 | -0.000 93226 | -0.000 58848 | 0.0002 44813 | 0.000 20977 1 | -0.000 18468 | 5.83E-05 | -8.68E-06 | 4.87E-07 |
| S5 | 0 | -0.012 29873 | 0.001 21204 5 | 0.001 40632 5 | -0.0023 4719 | 0.001 98388 8 | -0.000 93069 | 0.0002 47868 | -3.52E-05 | 2.08E-06 |
| S6 | -5.17 4007 87 | -0.003 15404 | 0.004 04895 3 | -0.003 45047 | 0.0031 04863 | -0.001 76963 | 0.000 65185 3 | -0.0001 4734 | 1.85E-05 | -9.76E-07 |
| S7 | 132. 9116 715 | -0.000 98823 | 0.003 137524 | -0.003 59441 | 0.0020 02714 | -0.000 69545 | 0.000 18317 8 | -3.81E-05 | 5.12E-06 | -3.04E-07 |
| S8 | 153. 4134 292 | -0.002 65867 | 0.006 441011 | -0.006 45816 | 0.0036 53305 | -0.001 4391 | 0.000 43402 9 | -9.40E-05 | 1.23E-05 | -7.06E-07 |
| S9 | 0 | -0.002 28682 | -0.001 56801 | -1.28E-05 | -0.0001 8996 | 0.000 18211 4 | -5.26E-05 | 8.96E-06 | -9.13E-07 | 3.28E-08 |
| S13 | 0 | 0.029 08125 3 | -0.033 6736 | 0.023 28671 7 | -0.0127 9366 | 0.004 97289 8 | -0.001 25617 | 0.0001 98198 | -1.79E-05 | 7.01E-07 |
| S14 | 0 | 0.029 62560 3 | -0.039 09607 | 0.029 34446 9 | -0.0159 2698 | 0.005 99551 2 | -0.001 45547 | 0.0002 15485 | -1.77E-05 | 6.18E-07 |
| S13 | 0 | 0.000 78504 3 | -0.014 78106 | 0.011 20397 5 | -0.0053 8417 | 0.001 75060 7 | -0.000 36226 | 4.49E-05 | -3.01E-06 | 8.37E-08 |
| S13 | 11.9 3442 678 | -0.001 73705 | 0.000 43904 3 | -0.002 95889 | 0.0023 00184 | -0.000 98153 | 0.000 24427 3 | -3.48E-05 | 2.64E-06 | -8.20E-08 |
| S14 | 1.94 4955 507 | -0.013 54061 | 0.004 29529 7 | -0.001 70353 | 0.0007 25622 | -0.000 26413 | 5.73E-05 | -6.76E-06 | 4.06E-07 | -9.77E-09 |
| S15 | -11.1 6979 9 | -0.009 86641 | -0.001 27579 | 0.000 92638 6 | -0.0003 1877 | 5.56E-05 | -5.71E-06 | 3.24E-07 | -6.74E-09 | -5.60E-11 |
| S16 | -7.50 2901 95 | -0.003 15247 | -0.003 38677 | 0.001 26247 2 | -0.0002 9851 | 4.50E-05 | -4.40E-06 | 2.69E-07 | -9.31E-09 | 1.37E-10 |
| S17 | -4.48 6854 69 | -0.053 64543 | 0.009 71947 5 | -0.001 50858 | 0.0001 78885 | -1.40E-05 | 6.94E-07 | -2.13E-08 | 3.70E-10 | -2.79E-12 |
| S18 | -6.55 3895 62 | -0.022 71458 | 0.003 79595 8 | -0.000 48558 | 4.19E-05 | -2.38E-06 | 8.79E-08 | -2.08E-09 | 2.92E-11 | -1.86E-13 |

EP 4 261 583 B1

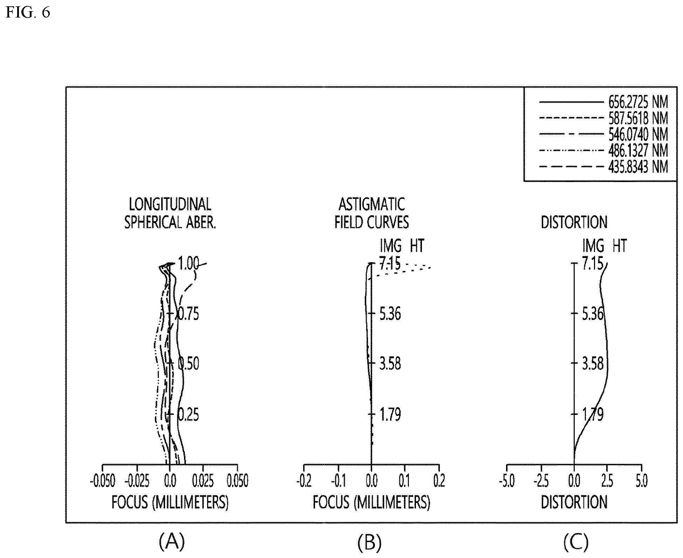

FIG. 6 is an analysis graph showing longitudinal spherical aberration, astigmatism, and distortion aberration of the optical system of FIG. 1. By the optical system according to the first embodiment, spherical aberration as shown in FIG. 6(A) may be exhibited, and the spherical aberration may be a phenomenon in which the focal point of the focus of light passing through different portions (e.g., center portion, peripheral portion) of the lens is changed. The horizontal axis represents the degree of longitudinal spherical aberration, and the vertical axis represents the normalization of the distance from the center of the optical axis, and may be shown the change of the longitudinal spherical aberration according to the wavelength of light. The longitudinal spherical aberration may be exhibited, for example, for light having a wavelength of approximately 656.2725 nm, approximately 587.5618 nm, approximately 546.0740 nm, approximately 486.1327 nm, or approximately 435.8343 nm, respectively. Referring to FIG. 6(A), it may be seen that the longitudinal spherical aberration of the optical system is limited to within +0.025 to -0.025, showing stable optical properties. FIG. 6(B) is a graph showing astigmatism in the optical system according to the first embodiment. The astigmatism may be that when a tangential plane or a meridian plane and a sagittal plane of the lens have different radii, the focus of light passing through the vertical direction and the horizontal direction is out of focus. Astigmatism of the optical system is a result obtained at a wavelength of approximately 546.0740 nm, the solid line indicates astigmatism (e.g., meridional curvature) in the tangential direction, and the dotted line indicates astigmatism (e.g., spherical surface curvature) in the sagittal direction. As shown in FIG. 6(B), it may be confirmed that the astigmatism is limited to within +0.050 to -0.050 to show stable optical properties.

FIG. 6(C) is a graph illustrating distortion aberration according to the optical system of the first embodiment. Distortion aberration occurs because the optical magnification changes according to the distance from the optical axis (O-I), and the image formed on the actual imaging plane (e.g., 190 in FIG. 1) may appear larger or smaller than the image formed on the theoretical imaging plane. In FIG. 6(C), the distortion of the optical system is a result obtained at a wavelength of approximately 546.0740 nm, and the image captured through the optical system may be slightly distorted at a point deviating from the optical axis O-1. However, such distortion is generally at a level that may be seen in an optical device using a lens, and the distortion rate is less than about 3%, so that good optical properties may be provided.

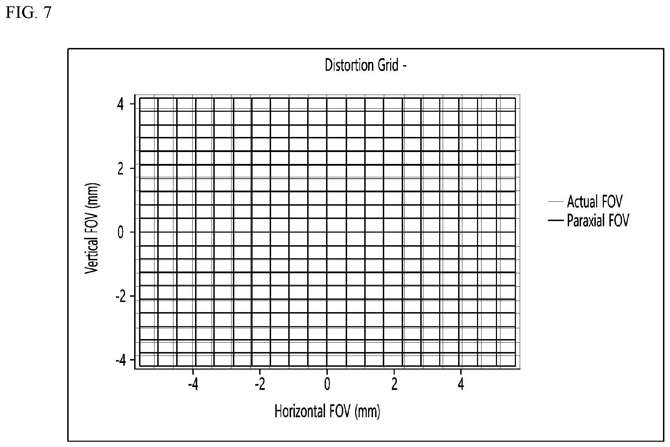

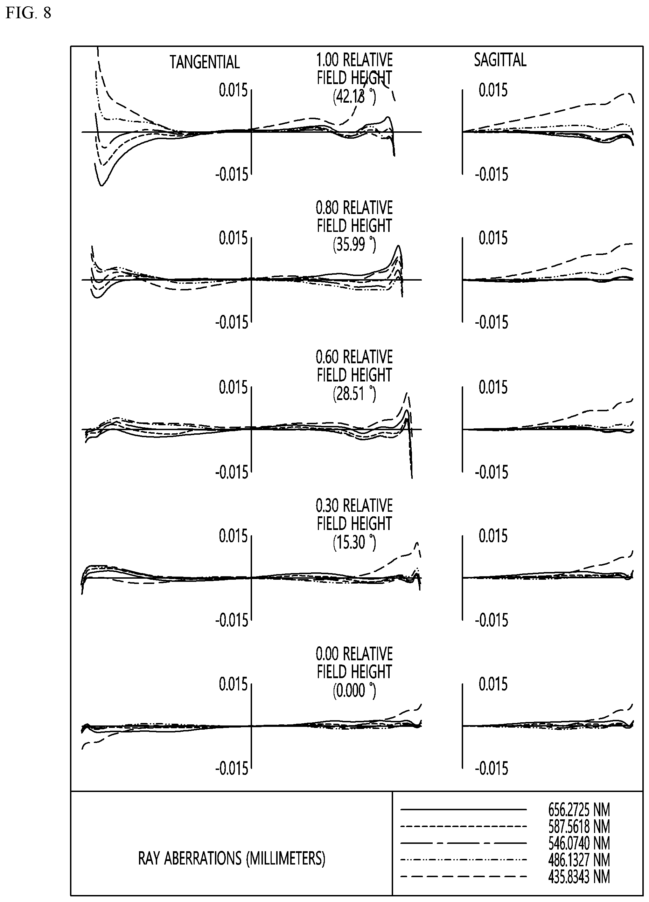

FIG. 7 is a distortion grid that occurs when light is emitted from the optical system according to the first embodiment. Here, it may be seen that distortion occurs in the left and right outer sides of the horizontal FOV (Field of View), and the distortion may be greater than the distortion generated in the vertical FOV. FIG. 8 is analysis graphs showing lateral aberration in a region where the relative field height on the optical axis is 0.0 to 1.0 in the tangential field curvature and the sagittal field curvature of the optical system shown in FIG. 1, and it may be confirmed that an optical system with good lateral aberration correction may be obtained.

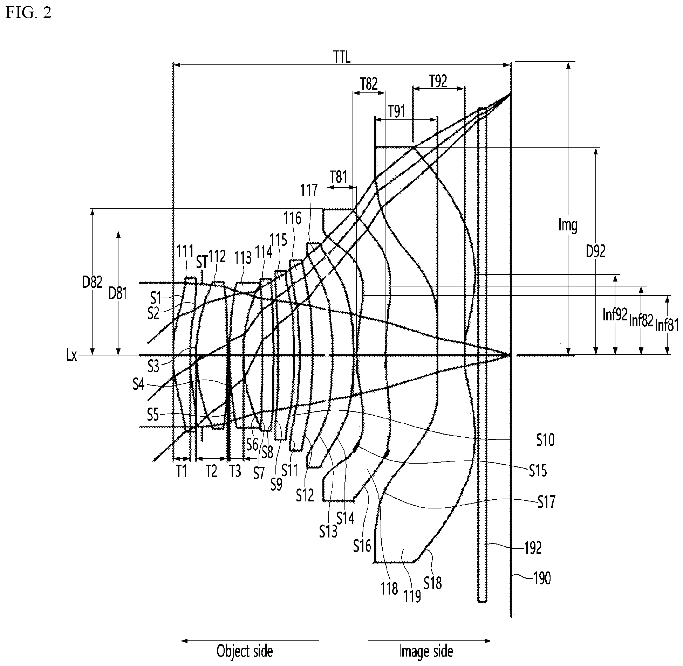

A second embodiment will refer to FIG. 2. Table 3 below is a value showing data of the radius of curvature, thickness, interval, refractive index, and Abbe's number of the surface of each lens of the second embodiment shown in FIG. 2.

[Table 3]

| Lens | Surface | Radius (mm) of curvature | Thickness(mm)/ Interval(mm) | Index | Abbe # |
|---|---|---|---|---|---|
| Lens 1 | S1 | 3.721 | 0.460 | 1.5343 | 55.656 |
| | S2 | 4.823 | 0.341 | | |
| Aperture | Stop | Infinity | -0.162 | | |
| Lens 2 | S3 | 4.629 | 0.854 | 1.5343 | 55.656 |
| | S4 | -33.253 | 0.050 | | |
| Lens 3 | S5 | 6.769 | 0.380 | 1.6714 | 19.238 |
| | S6 | 3.876 | 0.530 | | |
| Lens 4 | S7 | -41.005 | 0.310 | 1.567 | 37.565 |
| | S8 | -41.942 | 0.114 | | |
| Lens 5 | S9 | -366.287 | 0.447 | 1.5343 | 55.656 |
| | S10 | -9.643 | 0.153 | | |
| Lens 6 | S11 | -9.426 | 0.350 | 1.6714 | 19.238 |
| | S12 | -21.129 | 0.548 | | |
| Lens 7 | S13 | -11.679 | 0.565 | 1.5343 | 55.656 |
| | S14 | -10.693 | 0.098 | | |

(continued)

| Lens | Surface | Radius (mm) of curvature | Thickness(mm)/ Interval(mm) | Index | Abbe # |
|---|---|---|---|---|---|
| Lens 8 | S15 | 4.820 | 0.789 | 1.567 | 37.565 |
| | S16 | 7.411 | 1.416 | | |
| Lens 9 | S17 | 7.633 | 0.726 | 1.5343 | 55.656 |
| | S18 | 2.543 | 0.400 | | |
| Optical filter | S19 | Infinity | 0.21 | 1.5168 | 64.167 |
| | S20 | Infinity | 0.677 | | |

In Table 3, the thickness is the thickness (mm) of the center of each lens of FIG. 2, and the interval is the distance (mm) between two adjacent lenses. S19 denotes the incident side surface of the optical filter, and S20 denotes the exit surface of the optical filter.

Table 4 shows the values of the aspherical coefficients of the surfaces of each lens of FIG. 2.

[Table 4]

| Surface | K | A | B | C | D | E | F | G | H | J |
|---|---|---|---|---|---|---|---|---|---|---|
| S1 | - 3.776 36777 | 0.00 0244 441 | - 0.003 51515 | 0.001688 599 | - 0.0015 4539 | 0.0008 1779 | - 0.000 25165 | 4.80E -05 | - 5.32 E-06 | 2.59 E-07 |
| S2 | - 29.87 33658 | 0.01 8620 574 | - 0.020 42594 | 0.009947 11 | - 0.0045 5182 | 0.0019 68501 | - 0.000 61292 | 0.000 12016 | - 1.34 E-05 | 6.45 E-07 |
| S3 | - 21.85 73006 | 0.02 5466 773 | - 0.011 77583 | 0.003019 505 | 0.0009 06555 | - 0.0011 3574 | 0.000 56562 1 | - 0.000 16415 | 2.57 E-05 | - 1.69 E-06 |
| S4 | 0 | 0.00 0902 487 | 0.001 90119 4 | - 0.005014 59 | 0.0043 26391 | - 0.0021 2727 | 0.000 65154 1 | - 0.000 12302 | 1.31 E-05 | - 6.18 E-07 |
| S5 | 0 | - 0.01 3623 54 | 0.003 63766 4 | - 0.001789 05 | 0.0004 4667 | 0.0004 25629 | - 0.000 38375 | 0.000 13110 4 | - 2.14 E-05 | 1.38 E-06 |
| S6 | - 5.174 30026 | - 0.00 3679 8 | 0.005 01362 8 | - 0.004606 94 | 0.0040 64706 | - 0.0022 6891 | 0.000 80828 7 | - 0.000 17533 | 2.11 E-05 | - 1.06 E-06 |
| S7 | 157.9 50568 | - 0.00 2299 57 | 0.007 79487 | - 0.010560 3 | 0.0079 16653 | - 0.0039 376 | 0.001 36044 4 | - 0.000 31115 | 4.17 E-05 | - 2.47 E-06 |
| S8 | 160.2 81333 1 | - 0.00 3519 15 | 0.008 87117 8 | - 0.008487 71 | 0.0041 32816 | - 0.0012 4448 | 0.000 28164 4 | - 5.33E -05 | 7.14 E-06 | - 4.49 E-07 |
| S9 | 0 | -0.00 1020 48 | -0.004 84619 | 0.004361956 | -0.0034 6614 | 0.001676155 | -0.000 4755 | 8.13E-05 | -7.75 E-06 | 3.08E-07 |
| S13 | 0 | 0.03 5864 48 | - 0.044 70978 | 0.032539 925 | - 0.0175 631 | 0.0065 55999 | - 0.001 59589 | 0.000 24379 | - 2.13 E-05 | 8.16 E-07 |
| S14 | 0 | 0.03 2961 751 | - 0.045 00317 | 0.034352 589 | - 0.0185 2669 | 0.0068 36365 | - 0.001 62293 | 0.000 23516 7 | - 1.89 E-05 | 6.49 E-07 |
| S13 | 0 | - 0.00 0888 29 | 0.013 37553 | 0.010792 75 | 0.0053 0998 | 0.0017 22973 | 0.000 34982 | 4.20E -05 | 2.70 E-06 | 7.09 E-08 |
| S13 | 11.16 63224 4 | - 0.00 3566 5 | 0.001 35358 9 | - 0.002847 97 | 0.0020 15509 | - 0.0008 4143 | 0.000 20792 3 | - 2.94E -05 | 2.20 E-06 | - 6.76 E-08 |
| S14 | 3.980 21379 1 | - 0.01 2917 38 | 0.005 31851 1 | - 0.002811 47 | 0.0011 68309 | - 0.0003 5472 | 6.72E -05 | - 7.29 E -06 | 4.16 E-07 | - 9.68 E-09 |
| S15 | - 10.31 18775 | - 0.00 9864 4 | 0.000 42118 8 | - 0.000242 12 | 7.66E-05 | -2.37E-05 | 4.21E -06 | - 4.35 E-07 | 2.55 E-08 | - 6.34 E-10 |
| S16 | 6.392 95898 | - 0.00 4723 77 | 0.001 74081 | 0.000553 357 | 0.0001 2464 | 1.86E-05 | 1.86E -06 | 1.20E -07 | 4.40 E-09 | 6.84 E-11 |
| S17 | - 4.531 57219 | - 0.05 5069 06 | 0.010 54525 3 | - 0.001754 18 | 0.0002 18873 | -1.78E- 05 | 9.14E -07 | - 2.89E -08 | 5.13 E-10 | - 3.94 E-12 |
| S18 | - 6.506 57091 | - 0.02 3073 52 | 0.004 07970 3 | - 0.000543 44 | 4.83E-05 | -2.80E-06 | 1.05E -07 | - 2.50E -09 | 3.45 E-11 | - 2.12 E-13 |

EP 4 261 583 B1

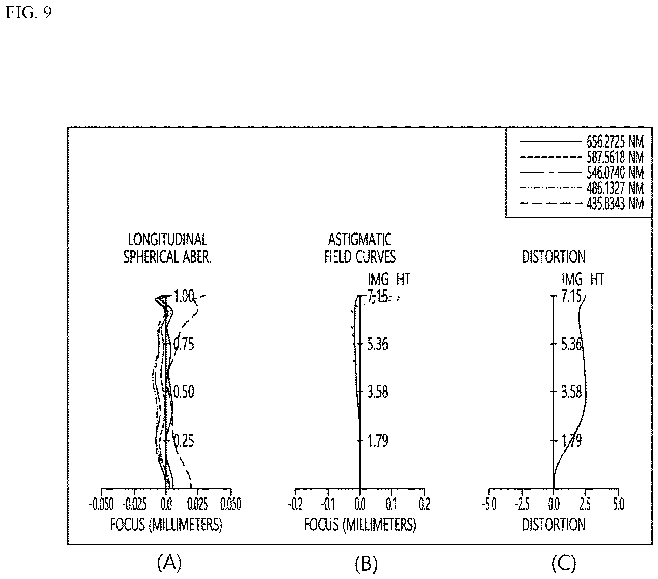

FIG. 9 is an analysis graph showing longitudinal spherical aberration, astigmatism, and distortion of the optical system of FIG. 2. By the optical system according to the second embodiment, spherical aberration as shown in FIG. 9(A) may be exhibited, and the spherical aberration may be a phenomenon in which the focal point of the focus of light passing through different portions (e.g., center portion, peripheral portion) of the lens is changed. The horizontal axis represents the degree of longitudinal spherical aberration, and the vertical axis represents the normalization of the distance from the center of the optical axis, and may be shown the change of the longitudinal spherical aberration according to the wavelength of light. The longitudinal spherical aberration may be exhibited, for example, for light having a wavelength of approximately 656.2725 nm, approximately 587.5618 nm, approximately 546.0740 nm, approximately 486.1327 nm, or approximately 435.8343 nm, respectively. Referring to FIG. 9(A), it may be seen that the longitudinal spherical aberration of the optical system is limited to within +0.025 to -0.025, showing stable optical properties. FIG. 9(B) is a graph showing astigmatism in the optical system according to the first embodiment. The astigmatism may be that when a tangential plane or a meridian plane and a sagittal plane of the lens have different radii, the focus of light passing through the vertical direction and the horizontal direction is out of focus. Astigmatism of the optical system is a result obtained at a wavelength of approximately 546.0740 nm, the solid line indicates astigmatism (e.g., meridional curvature) in the tangential direction, and the dotted line indicates astigmatism (e.g., spherical surface curvature) in the sagittal direction. As shown in FIG. 9(B), it may be confirmed that the astigmatism is limited to within +0.050 to -0.050 to show stable optical properties.

FIG. 9(C) is a graph showing distortion according to the optical system of the second embodiment. Distortion aberration occurs because the optical magnification changes according to the distance from the optical axis (O-I), and the image formed on the actual imaging plane (e.g., 190 in FIG. 1) may appear larger or smaller than the image formed on the theoretical imaging plane. In FIG. 9(C), the distortion of the optical system is a result obtained at a wavelength of approximately 546.0740 nm, and the image captured through the optical system may be slightly distorted at a point deviating from the optical axis O-1. However, such distortion is generally at a level that may be seen in an optical device using a lens, and the distortion rate is less than about 3%, so that good optical properties may be provided.

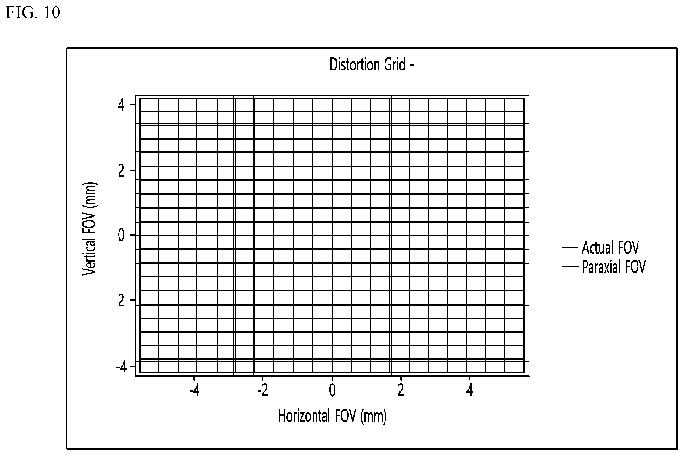

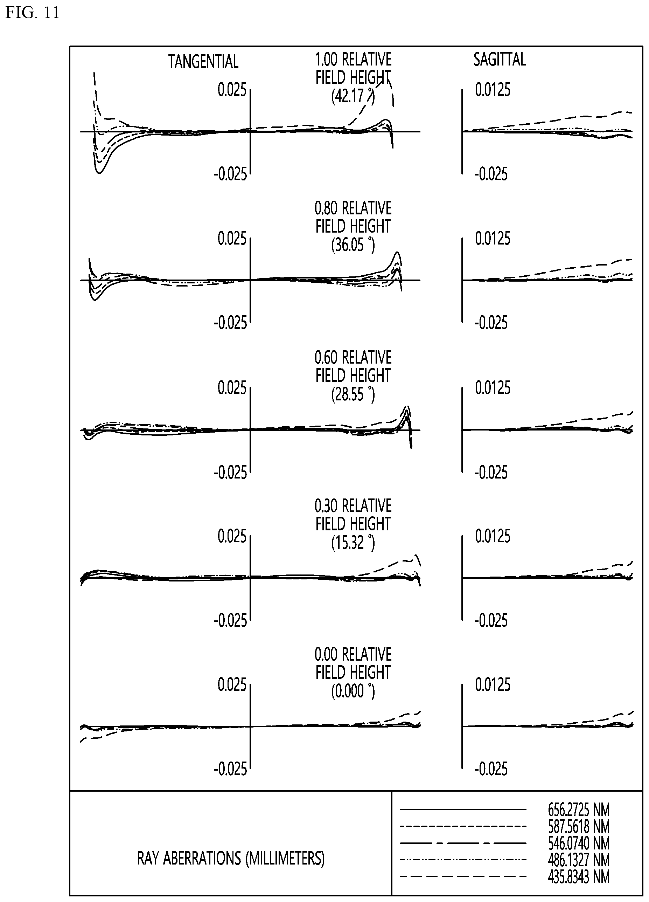

FIG. 10 is a distortion grid that occurs when light is emitted from the optical system according to the first embodiment. Here, it may be seen that distortion occurs in the left and right outer sides of the horizontal FOV (Field of View), and the distortion may be greater than the distortion generated in the vertical FOV. FIG. 11 is analysis graphs showing lateral aberration in a region where the relative field height on the optical axis is 0.0 to 1.0 in the tangential field curvature and the sagittal field curvature of the optical system shown in FIG. 2, and it may be confirmed that an optical system with good lateral aberration correction may be obtained.

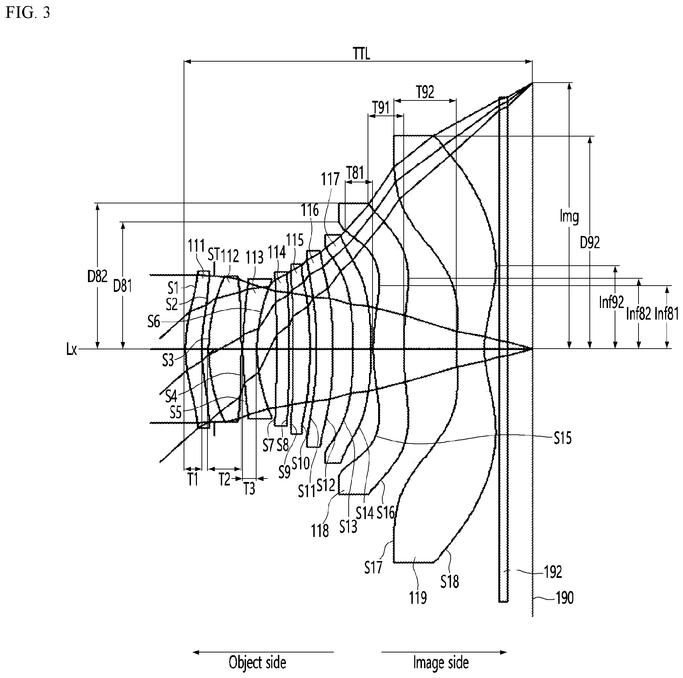

The third embodiment refers to FIG. 3, and Table 5 shows data showing the radius of curvature, thickness, interval, refractive index, and Abbe number of the surface of each lens of the third embodiment shown in FIG. 3.

[Table 5]

| Lens | Surface | Radius (mm) of curvature | Thickness(mm)/ Interval(mm) | Index | Abbe # |
|---|---|---|---|---|---|
| Lens 1 | S1 | 3.790 | 0.445 | 1.567 | 37.565 |
| | S2 | 4.565 | 0.340 | | |
| Aperture | Stop | Infinity | -0.162 | | |
| Lens 2 | S3 | 4.297 | 0.870 | 1.5343 | 55.656 |
| | S4 | -29.298 | 0.050 | | |
| Lens 3 | S5 | 7.160 | 0.380 | 1.68061 | 18.453 |
| | S6 | 3.860 | 0.527 | | |
| Lens 4 | S7 | -54.981 | 0.332 | 1.567 | 37.565 |
| | S8 | -41.950 | 0.114 | | |
| Lens 5 | S9 | -1084.119 | 0.448 | 1.5343 | 55.656 |
| | S10 | -10.298 | 0.176 | | |
| Lens 6 | S11 | -9.511 | 0.426 | 1.6714 | 19.238 |
| | S12 | -22.302 | 0.553 | | |
| Lens 7 | S13 | -11.493 | 0.487 | 1.5343 | 55.656 |
| | S14 | -11.007 | 0.056 | | |
| Lens 8 | S15 | 4.880 | 0.819 | 1.5843 | 28.227 |
| | S16 | 7.799 | 1.421 | | |

(continued)

| Lens | Surface | Radius (mm) of curvature | Thickness(mm)/ Interval(mm) | Index | Abbe # |
|---|---|---|---|---|---|
| Lens 9 | S17 | 7.670 | 0.736 | 1.5343 | 55.656 |
| | S18 | 2.597 | 0.400 | | |
| Optical filter | S19 | Infinity | 0.21 | 1.5168 | 64.167 |
| | S20 | Infinity | 0.691 | | |

In Table 5, the thickness is the thickness (mm) of the center of each lens of FIG. 3, and the interval is the distance (mm) between two adjacent lenses. S19 denotes the incident side surface of the optical filter, and S20 denotes the exit surface of the optical filter. Table 6 shows the values of the aspheric coefficients of the surfaces of each lens of FIG. 3.

[Table 6]

| Surface | K | A | B | C | D | E | F | G | H | J |
|---|---|---|---|---|---|---|---|---|---|---|
| S1 | - 3.873 97606 | - 0.000 64864 | - 0.00 3320 87 | 0.001 67569 1 | - 0.001 41267 | 0.000 69818 4 | - 0.0001 9978 | 3.55E-05 | - 3.73E -06 | 1.76E -07 |
| S2 | - 29.37 64218 | 0.020 84137 8 | - 0.02 5219 09 | 0.014 831711 | - 0.007 57135 | 0.003 17980 7 | - 0.0009 2542 | 0.0001 6938 | - 1.76E -05 | 7.93E -07 |
| S3 | - 21.50 54737 | 0.028 63329 2 | - 0.01 6727 8 | 0.007 13672 4 | - 0.001 45132 | - 0.000 21007 | 0.0003 26486 | - 0.0001 2593 | 2.24E -05 | - 1.57E -06 |
| S4 | 0 | - 0.000 41803 | 0.00 3025 307 | - 0.004 97392 | 0.003 454911 | - 0.001 34276 | 0.0003 02372 | -3.63E-05 | 1.60E -06 | 9.00E -09 |
| S5 | 0 | - 0.014 79224 | 0.00 4689 548 | - 0.001 06638 | - 0.001 25228 | 0.001 75540 4 | - 0.0009 6165 | 0.0002 77235 | - 4.14E -05 | 2.53E -06 |
| S6 | - 5.170 14066 | - 0.004 19485 | 0.00 5857 476 | - 0.005 81044 | 0.005 86954 6 | - 0.003 966 | 0.0017 31657 | - 0.0004 6385 | 6.92E -05 | - 4.38E -06 |
| S7 | 215.7 64805 2 | - 0.002 40456 | 0.00 8098 246 | - 0.011 25439 | 0.008 67867 6 | - 0.004 3349 | 0.0014 57315 | - 0.0003 1557 | 3.91E -05 | - 2.08E -06 |
| S8 | 177.9 66973 7 | - 0.004 85543 | 0.01 2619 668 | - 0.014 06896 | 0.009 00089 8 | - 0.003 85374 | 0.0011 56834 | - 0.0002 3195 | 2.74E -05 | - 1.42E -06 |
| S9 | 0 | - 0.002 66142 | - 0.00 1290 5 | - 0.000 13456 | - 0.000 16585 | 0.000 17057 8 | -4.40E-05 | 6.34E-06 | - 5.66E -07 | 1.46E -08 |
| S13 | 0 | 0.032 18839 7 | - 0.04 1838 53 | 0.030 80084 7 | - 0.016 67562 | 0.006 23504 1 | - 0.0015 2131 | 0.0002 32899 | - 2.04E -05 | 7.79E -07 |
| S14 | 0 | 0.031 48846 3 | - 0.04 3189 5 | 0.032 90189 7 | - 0.017 42926 | 0.006 30255 4 | - 0.0014 7217 | 0.0002 10958 | - 1.69E -05 | 5.76E -07 |
| S13 | 0 | - 1.42E -05 | - 0.01 4688 21 | 0.011 44186 5 | - 0.005 3922 | 0.001 66012 2 | - 0.0003 2103 | 3.70E-05 | - 2.31E -06 | 5.91E -08 |
| S13 | 11.76 33299 6 | - 0.001 41648 | - 0.00 1673 33 | - 0.000 73442 | 0.001 16666 6 | - 0.000 64845 | 0.0001 83522 | -2.79E-05 | 2.18E -06 | - 6.90E -08 |
| S14 | 1.583 63074 | - 0.013 52485 | 0.00 4703 743 | - 0.001 49692 | 0.000 43171 2 | - 0.000 15025 | 3.50E-05 | -4.35E-06 | 2.68E -07 | - 6.52E -09 |
| S15 | - 10.92 54278 | - 0.011 29949 | 0.00 1161 185 | - 0.000 26205 | - 8.41E -06 | 5.45E -06 | -3.70E-07 | -4.25E-08 | 7.37E -09 | - 2.79E -10 |
| S16 | 7.148 47094 | 0.004 29353 | 0.00 2194 02 | 0.000 77460 9 | 0.000 18911 | 3.00E -05 | -3.07E-06 | 1.95E-07 | 6.92E -09 | 1.04E -10 |
| S17 | - 4.761 12693 | - 0.051 59883 | 0.00 9384 778 | - 0.001 48882 | 0.000 17900 8 | - 1.41E -05 | 7.01E-07 | -2.15E-08 | 3.72E -10 | - 2.80E -12 |
| S18 | - 6.290 21323 | - 0.022 47974 | 0.00 3900 826 | - 0.000 51776 | 4.65E -05 | - 2.74E -06 | 1.05E-07 | -2.55E-09 | 3.58E -11 | - 2.21E -13 |

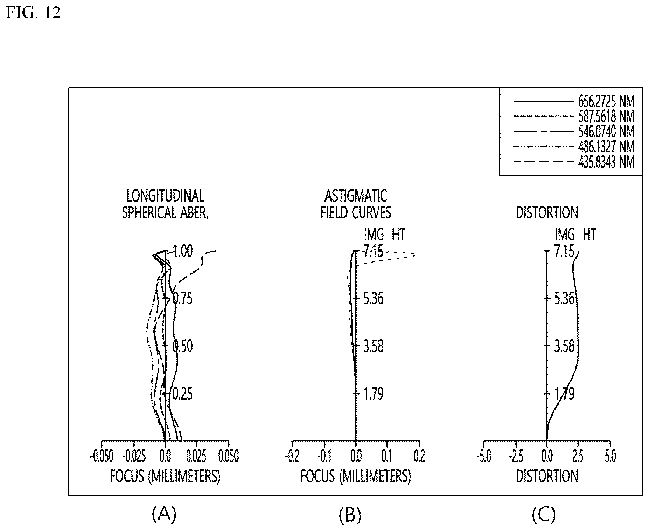

FIG. 12 is an analysis graph showing longitudinal spherical aberration, astigmatism, and distortion of the optical system of FIG. 3. By the optical system according to the third embodiment, spherical aberration as shown in FIG. 12(A) may be exhibited, and the spherical aberration may be a phenomenon in which the focal point of the focus of light passing through different portions (e.g., center portion, peripheral portion) of the lens is changed. The horizontal axis represents the degree of longitudinal spherical aberration, and the vertical axis represents the normalization of the distance from the center of the optical axis, and may be shown the change of the longitudinal spherical aberration according to the wavelength of light. The longitudinal spherical aberration may be exhibited, for example, for light having a wavelength of approximately 656.2725 nm, approximately 587.5618 nm, approximately 546.0740 nm, approximately 486.1327 nm, or approximately 435.8343 nm, respectively. Referring to FIG. 12(A), it may be seen that the longitudinal spherical aberration of the optical system is limited to within +0.025 to -0.025, showing stable optical properties. FIG. 12(B) is a graph showing astigmatism in the optical system according to the third embodiment. The astigmatism may be that when a tangential plane or a meridian plane and a sagittal plane of the lens have different radii, the focus of light passing through the vertical direction and the horizontal direction is out of focus. Astigmatism of the optical system is a result obtained at a wavelength of approximately 546.0740 nm, the solid line indicates astigmatism (e.g., meridional curvature) in the tangential direction, and the dotted line indicates astigmatism (e.g., spherical surface curvature) in the sagittal direction. As shown in FIG. 12(B), it may be confirmed that the astigmatism is limited to within +0.050 to -0.050 to show stable optical properties.

FIG. 12(C) is a graph showing distortion according to the optical system of the third embodiment. Distortion aberration occurs because the optical magnification changes according to the distance from the optical axis (O-I), and the image formed on the actual imaging plane (e.g., 190 in FIG. 1) may appear larger or smaller than the image formed on the theoretical imaging plane. In FIG. 12(C), the distortion of the optical system is a result obtained at a wavelength of approximately 546.0740 nm, and the image captured through the optical system may be slightly distorted at a point deviating from the optical axis O-1. However, such distortion is generally at a level that may be seen in an optical device using a lens, and the distortion rate is less than about 3%, so that good optical properties may be provided.

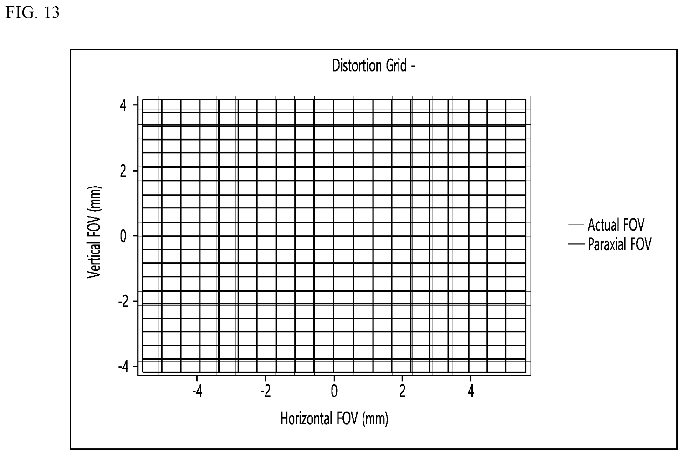

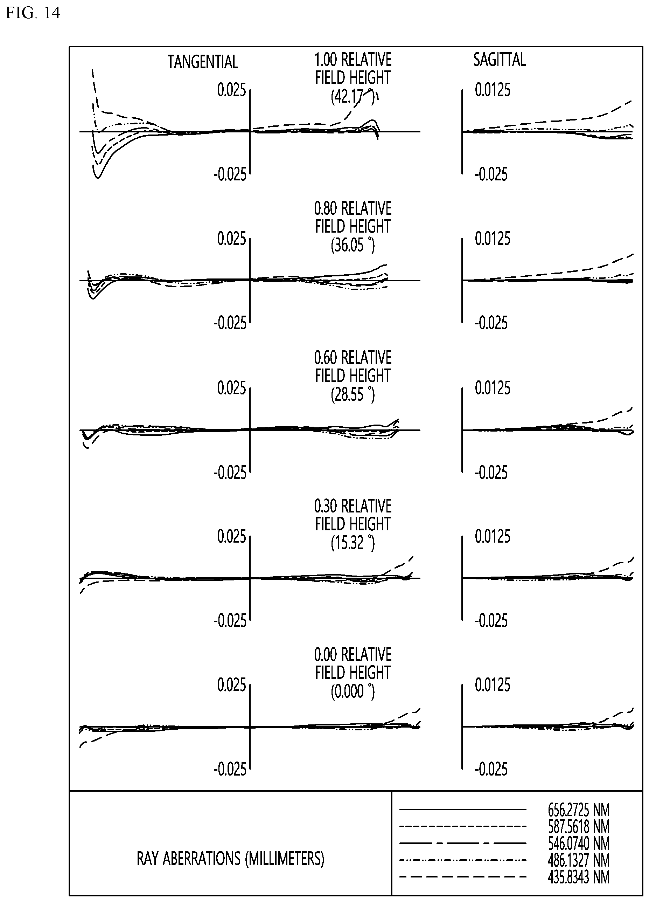

FIG. 13 is a distortion grid that occurs when light is emitted from the optical system according to the first embodiment. Here, it may be seen that distortion occurs in the left and right outer sides of the horizontal FOV (Field of View), and the distortion may be greater than the distortion generated in the vertical FOV. FIG. 14 is analysis graphs showing lateral aberration in a region where the relative field height on the optical axis is 0.0 to 1.0 in the tangential field curvature and the sagittal field curvature of the optical system shown in FIG. 3, and it may be confirmed that an optical system with good lateral aberration correction may be obtained.

As in the above first to third embodiments, it may be seen that each of the lenses 111-119 may be formed of a plastic lens, and all surfaces of each lens have aspheric coefficients.

In the first to third embodiments of the invention, the center thickness of the second lens 112 is the thickest, and may be, for example, 0.7 mm or more. The first interval between the third lens 113 and the fourth lens 114 and the second interval between the eighth lens 118 and the ninth lens 119 along the optical axis may be greater an interval between the first lens 111 and the second lenses 112 or the interval between the second lens 112 and the third lens 113, or may be greater than the intervals between the fourth to sixth lenses 114, 115, and 116. The first and second intervals may be, for example, 0.7 mm or more. The first interval between the third lens 113 and the fourth lens 114 along the optical axis may be smaller than the second interval between the eighth lens 118 and the ninth lens 119.

In an embodiment of the invention, when nine or more lenses 111-119 are stacked, in order to prevent an increase in the total distance (TTL) of the optical system, lenses having relatively large effective diameters, for example, a stacked structure of the seventh, eighth, and ninth lenses 117, 118, and 119 may be made under the following conditions.

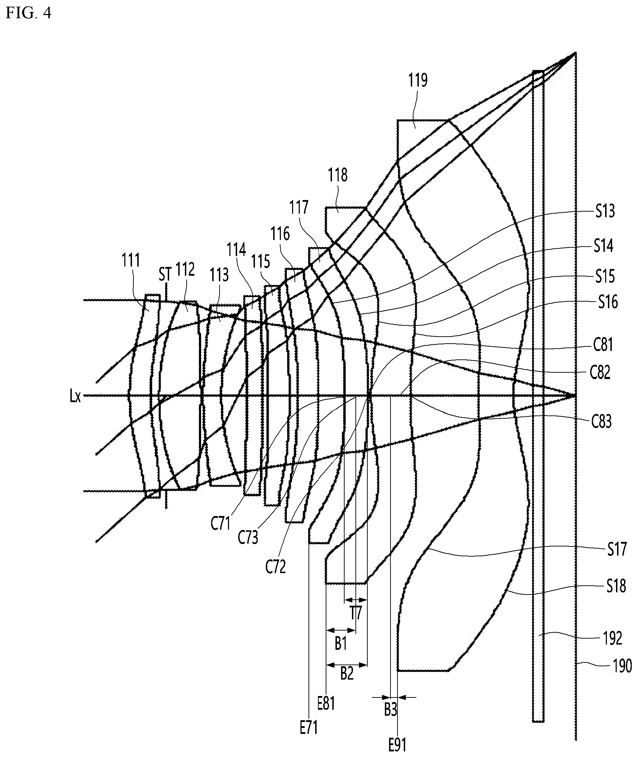

Referring to FIG. 4, comparing the difference in distance (optical axis direction) between the edge sides of two adjacent lenses among the seventh, eighth, and ninth lenses 117, 118, and 119, the condition of (E81-E71) < (E91-E81) may be satisfied. E71 is a straight line extending in a direction perpendicular to the optical axis Lx from the edge of the thirteenth surface S13 of the seventh lens 117 or a straight line connecting the edge of the object-side surface, and E81 is a straight line extending in a direction perpendicular to the optical axis Lx from the edge of the fifteenth S15 of the eighth lens 118, and a straight line connecting the edges of the object-side surface, and E91 is a straight line extending in a direction perpendicular to the optical axis Lx from the edge of the seventeenth S17 of the nineth lens 119, or a straight line connecting the edges of the object-side surface.

Here, in the distance in the optical axis direction, a straight line E81 extending in a direction perpendicular to the optical axis direction along the edge of the fifteenth surface S15 of the eighth lens 118 is located closer to the straight lien E71 than the straight line (e.g., a straight line perpendicular to the optical axis) passing through the center C72 of the surface S14 of the seventh lens 117 or protrudes toward the first lens 111, and may be the same as a straight line passing through the middle C73 between the centers C71 and C72 of both sides of the seventh lens 117 or may be located closer to the straight line E71 or the first lens 111.

Here, the straight line E81 passing through the object side edge of the eighth lens 118 has the first distance B1 from a straight line passing through the middle C73 of both sides of the seventh lens 117, and has the second distance B2 from a straight line passing through the middle C73 of the sensor-side fourteenth surface S14 of the seventh lens 117, and the third distance B3 is between the edge-side straight line E91 of the object-side seventeenth surface S17 of the ninth lens 119 and a straight line passing through the middle C83 of the centers C81 and C82 on both sides of the eighth lens 118. A condition of the distance B3<B1<B2 is satisfied, and B1 may be 80% or more of the thickness T7 of the seventh lens 17, for example, in a range of 80% to 120%. Accordingly, the upper portion of outer of the eighth lens 118 is provided in a shape surrounding the object side of the seventh lens 117, and the incident-side fifteenth surface S15 of the eighth lens 118 may be effectively received through the effective region of the emission side seventeenth S14 of the seventh lens 117, so that light loss may be reduced, and light may be provided up to the edge region of the image sensor 190, and the resolution deterioration may be prevented.

The optical system according to the first to third embodiments of the invention may satisfy at least one or two or more of the following equations. Accordingly, the optical systems according to the first to third embodiments may have optically improved effects.

Table 7 may satisfy the following conditions in the optical systems of the first to third embodiments.

[Table 7]

| Item | Embodiment 1 | Embodiment 2 | Embodiment 3 |
|------|-------------|-------------|-------------|
| BFL | 1.348 | 1.287 | 1.301 |
| TTL | 9.21 | 9.26 | 9.32 |
| Img | 7.15 | 7.15 | 7.15 |
| F | 7.717 | 7.707 | 7.735 |
| f29 | 14.07 | 14.06 | 12.07 |
| f12 | 6.20 | 6.18 | 6.04 |
| f13 | 9.27 | 9.32 | 9.53 |
| L2R1 | 4.648 | 4.629 | 4.297 |
| L2R2 | -34.791 | -33.253 | -29.298 |
| L3R1 | 6.828 | 6.769 | 7.159 |
| L3R2 | 3.925 | 3.876 | 3.859 |
| G2 | 1.5343 | 1.5343 | 1.5343 |
| G3 | 1.6714 | 1.6714 | 1.6806 |
| T1 | 0.459 | 0.46 | 0.445 |
| T2 | 0.841 | 0.854 | 0.870 |
| T3 | 0.393 | 0.38 | 0.380 |
| f1 | 26.227 | 26.492 | 32.361 |
| f2 | 7.699 | 7.633 | 7.047 |
| f3 | -14.371 | -14.095 | -12.751 |
| f4 | -4316.721 | -3654.3 | 307.330 |
| f5 | 18.189 | 18.449 | 19.372 |
| f6 | -24.645 | -25.349 | -24.738 |
| f7 | 171.135 | 196.594 | 359.431 |
| f8 | 22.065 | 21.755 | 20.050 |
| f9 | -7.606 | -7.478 | -7.709 |
| Inf81 | 1.742 | 1.798 | 1.783 |
| Inf82 | 1.861 | 1.904 | 1.859 |
| Inf92 | 2.158 | 2.202 | 2.228 |
| D81 | 3.243 | 3.275 | 3.195 |
| D82 | 3.934 | 3.991 | 3.901 |

(continued)

| Item | Embodiment 1 | Embodiment 2 | Embodiment 3 |
|---|---|---|---|
| D92 | 5.641 | 5.683 | 5.731 |
| T81 | 0.871 | 0.839 | 0.766 |
| T82 | 1.01 | 0.905 | 0.945 |
| T91 | 1.681 | 1.706 | 1.689 |
| T92 | 1.478 | 1.407 | 1.375 |

In Table 7 above, F is the total focal length, f29 is the combined focal length (mm) from the second lens 112 to the ninth lens 119, and f12 is the combined focal length (mm) of the first lens 111 and the second lens 112, f13 is the combined focal length (mm) of the first lens 111 and the third lens 113, and L2R1 is the radius (mm) of curvature of the object-side surface S3 of the second lens 112, L2R2 is the radius of curvature of the sensor-side surface S4 of the second lens 112, L3R1 is the radius (mm) of curvature of the object-side surface S5 of the third lens 113, and L3R2 is the radius of curvature of the sensor-side surface S6 of the third lens 113, G2 is the refractive index at 587 nm of the second lens 112, G3 is the refractive index at 587 nm of the third lens 113, T1, T2 and T3 are the center thicknesses (mm) of the first lens 111, the second lens 112, and the third lens 113, and f1, f2, f3, f4, f5, f6, f7, f8, and f9 are focal lengths of the first to ninth lenses 111-119, respectively. From Table 7, it may be said that each numerical value is large and small through comparison with different values, and when it has a difference of 0.1 mm or less, it may be described as being equal to or greater than, or equal to or less than. Table 8 may be expressed by Equation 1 to Equation 27 by reflecting the characteristics of each lens of the optical system. The optical systems of the first to third embodiments may satisfy the range of at least one, two or more, or all of the following Equations 1 to 27.

[Table 8]

| Equation # | Equation range |
|---|---|
| eq1. | 0 < BFL/TTL < 0.3 |
| eq2. | 0 < BFL/Img < 0.3 |
| eq3. | 0.5 < F/TTL < 1.2 |
| eq4. | 0.5 < TTL/(Img x 2) < 0.8 |
| eq5. | 0.5 < TTL/(D92 x 2) < 1.2 |
| eq6. | 0 < f2/F < 2 |
| eq7. | -5 < F2/F3 < 0 |
| eq8. | 0 < f2/f29 < 2 |
| eq9. | 0.5 < f2/f12 < 5 |
| eq10. | 1 < f29/F < 5 |
| eq11. | f12/F |
| eq12. | 0.1 < f12/f13 < 1 |
| eq13. | 0.5 < f13/F < 5 |
| eq14. | 0 < L2R1/|L2R2| < 0.5 |
| eq15. | 0.2 < L3R2/|L3R1| < 1 |
| eq16. | 0.7 < G2/G3 < 1.2 |
| eq17. | 0.2 < T3/T2 < 1 |
| eq18. | 0.2 < T1/T2 < 1 |
| eq19. | 0.6 < Inf81/Inf82 < 1.2 |
| eq20. | 0.6 < Inf81/Inf92 < 1.2 |
| eq21. | 0.2 < Inf81/D81 < 0.8 |

(continued)

| Equation # | Equation range |
|---|---|
| eq22. | 0.2 < Inf82/D82 < 0.8 |
| eq23. | 0.2 < Inf92/D92 < 0.8 |
| eq24. | 0.1 < T81/D81 < 0.5 |
| eq25. | 0.1 < T82/D82 < 0.5 |
| eq26. | 0.1 < T92/D92 < 0.5 |
| eq27. | 0.8 < T91/T92 < 1.5 |

Table 9 may be expressed as detailed numerical ranges according to each equation in the optical systems of the first to third embodiments based on Table 8.

[Table 9]

| Equation # | equation Term | Embodiment 1 | Embodiment 2 | Embodiment 3 |
|---|---|---|---|---|
| eq1. | BFL/TTL | 0.146 | 0.139 | 0.140 |
| eq2. | BFL/Img | 0.189 | 0.180 | 0.182 |
| eq3. | F/TTL | 0.838 | 0.832 | 0.830 |
| eq4. | TTL/(Img x 2) | 0.644 | 0.648 | 0.652 |
| eq5. | TTL/(D92 x 2) | 0.816 | 0.815 | 0.813 |
| eq6. | f2/F | 0.998 | 0.990 | 0.911 |
| eq7. | f2/f3 | -0.536 | -0.542 | -0.553 |
| eq8. | f2/f29 | 0.547 | 0.543 | 0.584 |
| eq9. | f2/f12 | 1.242 | 1.235 | 1.167 |
| eq10. | f29/F | 1.823 | 1.824 | 1.560 |
| eq11. | f12/F | 0.803 | 0.802 | 0.781 |
| eq12. | f12/f13 | 0.669 | 0.663 | 0.634 |
| eq13. | f13/F | 1.201 | 1.209 | 1.232 |
| eq14. | L2R1/|L2R2| | 0.134 | 0.139 | 0.147 |
| eq15. | L3R2/|L3R1| | 0.575 | 0.573 | 0.539 |
| eq16. | G2/G3 | 0.918 | 0.918 | 0.913 |
| eq17. | T3/T2 | 0.467 | 0.445 | 0.437 |
| eq18. | T1/T2 | 0.546 | 0.539 | 0.511 |
| eq19. | Inf81/Inf82 | 0.936 | 0.944 | 0.959 |
| eq20. | Inf81/Inf92 | 0.807 | 0.817 | 0.800 |
| eq21. | Inf81/D81 | 0.537 | 0.549 | 0.558 |
| eq22. | Inf82/D82 | 0.473 | 0.477 | 0.477 |
| eq23. | Inf92/D92 | 0.383 | 0.387 | 0.389 |
| eq24. | T81/D81 | 0.269 | 0.256 | 0.240 |
| eq25. | T82/D82 | 0.257 | 0.227 | 0.242 |
| eq26. | T92/D92 | 0.262 | 0.248 | 0.240 |
| eq27. | T91/T92 | 1.137 | 1.213 | 1.228 |

The relation of 0 < BFL/TTL < 0.3 in Equation 1 may provide a high-resolution optical system by providing TTL with a longer length compared to BFL. The relation of 0 < BFL/Img < 0.3 in Equation 2 shows the relationship between the distance from the center of the sensor-side eighteenth surface S18 of the ninth lens 119 to the image sensor 190 and the distance from the optical axis Lx to 1.0F, it is possible to provide an image sensor 190 having a high resolution and a large size by satisfying the relation of (BFL×2)<Img.

The relationship between the total length of the optical system and the effective focal length was defined by the relation of 0.5 < F/TTL < 1.2 in Equation 3. The total length TTL may be provided in the range of 50% to 80% of the diagonal length of the image sensor 190 by the relation of 0.5<TTL/(Img×2)<0.8 of Equation 4.

In Equation 14, |L2R2| represents the absolute value of the radius of curvature of the sensor-side surface S4 of the second lens 112 and may be greater than the radius of curvature L2R1 of the object-side surface S3 of the second lens 112, |L3R1| in Equation 15 represents the absolute value of the radius of curvature of the object-side surface S5 of the third lens 113, and may be larger than the radius of curvature L3R2 of the sensor-side surface S6 of the third lens 113.

The optical performance may be improved by the thickness relation of the centers of the first, second, and third lenses 111, 112, and 113 of Equations 17 and 18. According to Equations 19 and 20, the refractive power of the incident light may be improved through the relationships among the straight distance inf81 from the optical axis to the inflection point of the object-side surface S15 of the eighth lens 118 and the straight distance inf82 from the optical axis to the inflection point of the sensor-side surface S16 of the eighth lens 118, and the straight distance inf92 from the optical axis to the inflection point of the sensor-side surface S18 of the ninth lens 119.

According to Equations 21 to 23, the straight distance D81 from the optical axis to the end of the effective region of the object-side surface S15 of the eighth lens 118, the straight distance D82 from the optical axis to the effective region end of the sensor-side surface S16 of the eighth lens 118, and the straight distance D92 from the optical axis to the end of the effective region of the sensor-side surface S18 of the ninth lens 119 may be greater than the straight distances inf81, inf82, and inf92 from the optical axis to inflection points of the eighth and ninth lenses 118 and 119. Accordingly, it is possible to provide an effective diameter outside the inflection point, thereby improving the refractive power of light.

According to Equations 24 to 27, the refractive power of in the eighth and ninth lens 118 and 119 may be improved through the relationships among the optical axis distances from the centers of the object-side surface S15 and the sensor-side surface S16 of the eighth lens 118 to the ends of the effective region, and the distances from the centers of the object-side surface S17 and sensor-side surface S18 of the ninth lens 119 to the ends of the effective region, and the straight distance from the optical axis to the end of the effective region.

The optical system according to the first to third embodiments of the invention may satisfy at least one, two or more, five or more, or all of Equations 1 to 27. In this case, the optical system may implement a high-quality and high-resolution imaging lens system. In addition, unnecessary light entering the optical system may be blocked by at least one of Equations 1 to 27, aberration may be corrected, and performance of the optical system may be improved.

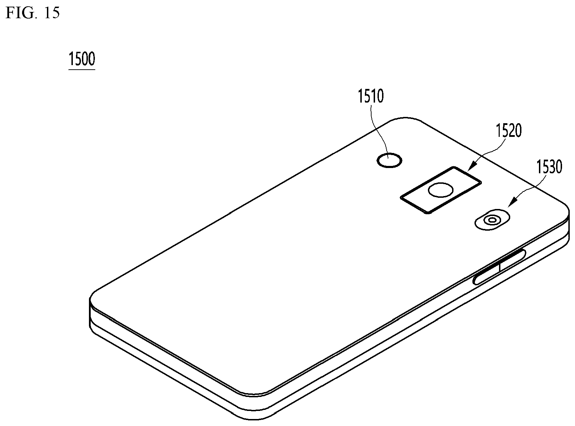

FIG. 15 is a perspective view illustrating an example of a moving device to which an optical system according to an embodiment(s) of the invention is applied. As shown in FIG. 15, the mobile terminal 1500 may include a camera module 1520, a flash module 1530, and an auto-focus device 1510 provided on one side or the rear side. Here, the autofocus device 1510 may include a surface light emitting laser device and a light receiving unit as a light emitting layer. The flash module 1530 may include an emitter emitting light therein. The flash module 1530 may be operated by a camera operation of a mobile terminal or a user's control. The camera module 1520 may include an image capturing function and an auto focus function. For example, the camera module 1520 may include an auto-focus function using an image. The auto-focus device 1510 may include an auto-focus function using a laser. The autofocus device 1510 may be mainly used in a condition in which the autofocus function using the image of the camera module 1520 is deteriorated, for example, in proximity of 10 m or less or in a dark environment.

The scope of the invention is defined in the appended claims.

**Claims**

**1.** An optical system comprising:

a first lens (111), a second lens (112), a third lens (113), a fourth lens (114), a fifth lens (115), a sixth lens (116), a seventh lens (117), an eighth lens (118), and a ninth lens (119) which are sequentially arranged along an optical axis (Lx) from an object side to a sensor side,
wherein the first lens (111) has a convex object-side surface,
wherein the second lens (112) has a positive refractive power and has a convex object-side surface,
wherein the third lens (113) has a negative refractive power and a concave sensor-side surface,
wherein the eighth lens (118) has a positive refractive power, and at least one of an object-side surface and a sensor-side surface of the eighth lens has at least one inflection point,

wherein the ninth lens (119) has negative refractive power and an object-side surface and a sensor-side surface of the ninth lens have at least one inflection point, and

wherein a center thickness (T2) of the second lens (112) is greater than a center thickness of each of the first and third to the ninth lenses,

wherein the optical system comprises not more than nine lenses, **characterized in that** refractive indices of the third, sixth, and eighth lenses are greater than refractive indices of the first, second, fifth, seventh and ninth lenses.

2. The optical system of claim 1,
wherein the center thickness of the second lens is in a range of 2 to 4 times the center thickness of the third lens.

3. The optical system of claim 1 or 2, wherein the optical axis interval between the adjacent eighth and ninth lenses (118, 119) is greater than the sum of the center thicknesses of the first and second lenses (111,112).

4. The optical system of any one of claims 1 to 3, wherein Abbe numbers of the first, second, fourth, fifth, seventh and ninth lenses are 50 or more, and Abbe numbers of the third and sixth lenses are less than 30.

5. The optical system of any one of claims 1 to 4, wherein the first, fifth, and seventh lenses have positive refractive power.

6. The optical system of any one of claims 1 to 5, comprising an image sensor on a sensor side of the ninth lens; and an optical filter between the image sensor and the ninth lens,

wherein the optical system satisfies Equations 1 and 2:

$$[\text{Equation 1}]\ 0 < BFL/TTL < 0.3$$

$$[\text{Equation 2}]\ 0 < BFL/Img < 0.3$$

where BFL is a distance from a center of the sensor-side surface of the ninth lens to an image sensor, TTL is a distance from a center of the object-side first surface of the first lens to the image sensor, and Img is a vertical distance from the optical axis to 1.0F, which is a diagonal end on the image sensor.

7. The optical system of any one of claims 1 to 6, comprising an image sensor on a sensor side of the ninth lens and an optical filter between the image sensor and the ninth lens,

wherein the optical system satisfies Equations 3, 4 and 5:

$$[\text{Equation 3}]\ 0.5 < F/TTL < 1.2$$

$$[\text{Equation 4}]\ 0.5 < TTL/(Img \times 2) < 0.8$$

$$[\text{Equation 5}]\ 0.5 < TTL/(D92 \times 2) < 1.2$$

where **TTL** is a distance from a center of an object-side first surface of the first lens to the image sensor, F is a total effective focal length of the optical system, Img is a vertical distance from the optical axis to 1.0F, which is a diagonal end on the image sensor, and D92 is a distance from a center of the sensor-side surface of the ninth lens to an end of an effective region on the optical axis.

8. The optical system of any one of claims 1 to 7, wherein a radius of curvature of the object-side surface of the second lens is L2R1, and an absolute value of a radius of curvature of a sensor-side surface of the second lens is defined as |L2R2|, wherein a following relation is satisfied: $0 < L2R1/|L2R2| < 0.5$.

9. The optical system of any one of claims 1 to 8, wherein an absolute value of a radius of curvature of an object-side surface of the third lens is |L3R1|, and a radius of curvature of the sensor-side surface of the third lens is L3R2, wherein a following relation is satisfied: $0.2 < L4R2/|L4R1| < 1$.

10. The optical system of any one of claims 1 to 9, wherein a refractive index of the second lens at 587 nm is G2 and a refractive index of the third lens at 587 nm is G3, wherein a following relation is satisfied: 0.7 < G2/G3 < 1.2.

11. The optical system of any one of claims 1 to 10, wherein a center thickness of the first lens is T1, a center thickness of the second lens is T2, and a center thickness of the third lens is T3, wherein following relations are satisfied: 0.2 < T3/T2 < 1 and 0.2 < T1/T2 < 1.

12. The optical system of any one of claims 1 to 11,

   wherein the first lens has a positive or negative refractive power and a concave sensor side surface,
   wherein the second lens has a convex sensor-side surface,
   wherein an edge of the object-side surface of the eighth lens protrudes farther toward the first lens than a center on the optical axis of the object-side surface of the eighth lens,
   wherein a straight line connecting edges of the object-side surface of the eighth lens is the same as a straight line orthogonal to the optical axis in a middle between an object-side surface and a sensor-side surface of the seventh lens or is located closer to the first lens.

13. The optical system of claim 12, wherein the straight line connecting the edges of the object-side surface of the eighth lens is located closer to the first lens than a straight line orthogonal to the optical axis at a center of the object-side surface of the seventh lens.

14. The optical system of any one of claims 1 to 13, wherein an interval between the fourth lens and the fifth lens along the optical axis is greater than a first interval between the first lens and the second lens, wherein a second interval between the eighth lens and the ninth lens along the optical axis is greater than the first interval.

15. The optical system of claim 14, wherein the first and second intervals are 0.4 mm or more,

   wherein f2 is a focal length of the second lens (112), and f12 is the combined focal length of the first lens (111) and the second lens (112), and
   wherein following relation is satisfied 0.5 < f2/f12 < 5.

**Patentansprüche**

1. Optisches System umfassend:

   eine erste Linse (111), eine zweite Linse (112), eine dritte Linse (113), eine vierte Linse (114), eine fünfte Linse (115), eine sechste Linse (116), eine siebte Linse (117), eine achte Linse (118), und eine neunte Linse (119), die entlang einer optischen Achse (Lx) von einer Objektseite zu einer Sensorseite nacheinander angeordnet sind,
   wobei die erste Linse (111) eine konvexe objektseitige Oberfläche aufweist,
   wobei die zweite Linse (112) eine positive Brechkraft aufweist und eine konvexe objektseitige Oberfläche aufweist,
   wobei die dritte Linse (113) eine negative Brechkraft und eine konkave sensorseitige Oberfläche aufweist,
   wobei die achte Linse (118) eine positive Brechkraft aufweist, und wenigstens eine von einer objektseitigen Oberfläche und einer sensorseitigen Oberfläche der achten Linse wenigstens einen Wendepunkt aufweist,
   wobei die neunte Linse (119) einen negativen Brechungsindex aufweist und eine objektseitige Oberfläche und eine sensorseitige Oberfläche der neunten Linse wenigstens einen Wendepunkt aufweisen, und
   wobei eine Zentrumsdicke (T2) der zweiten Linse (112) größer als eine Zentrumsdicke von jeder der ersten und dritten bis neunten Linsen ist,
   wobei das optische System nicht mehr als neun Linsen umfasst,
   **dadurch gekennzeichnet, dass**
   Brechungsindizes der dritten, sechsten und achten Linsen größer als Brechungsindizes der ersten, zweiten, fünften, siebten und neunten Linsen sind.

2. Optisches System nach Anspruch 1,
   wobei die Zentrumsdicke der zweiten Linse in einem Bereich des 2- bis 4-Fachen der Zentrumsdicke der dritten Linse ist.

3. Optisches System nach Anspruch 1 oder 2, wobei das Intervall der optischen Achse zwischen den benachbarten achten und neunten Linsen (118, 119) größer als die Summe der Zentrumsdicken der ersten und zweiten Linsen (111, 112) ist.

4. Optisches System nach einem der Ansprüche 1 bis 3, wobei Abbe-Zahlen der ersten, zweiten, vierten, fünften, siebten und neunten Linsen 50 oder mehr sind, und Abbe-Zahlen der dritten und sechsten Linsen geringer als 30 sind.

5. Optisches System nach einem der Ansprüche 1 bis 4, wobei die ersten, fünften und siebten Linsen eine positive Brechkraft aufweisen.

6. Optisches System nach einem der Ansprüche 1 bis 5, umfassend einen Bildsensor auf einer Sensorseite der neunten Linse; und einen optischen Filter zwischen dem Bildsensor und der neunten Linse,

   wobei das optische System Gleichungen 1 und 2 erfüllt:

$$[\text{Gleichung 1}]\ 0 < BFL/TTL < 0.3$$

$$[\text{Gleichung 2}]\ 0 < BFL/Img < 0.3$$

   wobei BFL ein Abstand von einem Zentrum der sensorseitigen Oberfläche der neunten Linse zu einem Bildsensor ist, TTL ein Abstand von einem Zentrum der objektseitigen ersten Oberfläche der ersten Linse zu dem Bildsensor ist, und Img ein vertikaler Abstand von der optischen Achse zu 1.0F ist, welches ein diagonales Ende auf dem Bildsensor ist.

7. Optisches System nach einem der Ansprüche 1 bis 6, umfassend einen Bildsensor auf einer Sensorseite der neunten Linse und einen optischen Filter zwischen dem Bildsensor und der neunten Linse,

   wobei das optische System Gleichungen 3, 4 und 5 erfüllt:

$$[\text{Gleichung 3}]\ 0.5 < F/TTL < 1.2$$

$$[\text{Gleichung 4}]\ 0.5 < TTL/(Img \times 2) < 0.8$$

$$[\text{Gleichung 5}]\ 0.5 < TTL/(D92 \times 2) < 1.2$$

   wobei TTL ein Abstand von einem Zentrum einer objektseitigen ersten Oberfläche der ersten Linse zu dem Bildsensor ist, F eine effektive Gesamtbrennweite des optischen Systems ist, Img ein vertikaler Abstand von der optische Achse zu 1.0F ist, welches ein diagonales Ende auf dem Bildsensor ist, und D92 ein Abstand von einem Zentrum der sensorseitigen Oberfläche der neunten Linse zu einem Ende einer effektiven Region auf der optischen Achse ist.

8. Optisches System nach einem der Ansprüche 1 bis 7, wobei ein Krümmungsradius der objektseitigen Oberfläche der zweiten Linse L2R1 ist, und ein absoluter Wert eines Krümmungsradius einer sensorseitigen Oberfläche der zweiten Linse als |L2R2| definiert ist, wobei eine folgende Beziehung erfüllt ist: 0 < L2R1/|L2R2| < 0.5.

9. Optisches System nach einem der Ansprüche 1 bis 8, wobei ein absoluter Wert eines Krümmungsradius einer objektseitigen Oberfläche der dritten Linse |L3R1| ist, und ein Krümmungsradius der sensorseitigen Oberfläche der dritten Linse L3R2 ist, wobei eine folgende Beziehung erfüllt ist: 0.2 < L4R2/L4R1| < 1.

10. Optisches System nach einem der Ansprüche 1 bis 9, wobei ein Brechungsindex der zweiten Linse bei 587 nm G2 ist und ein Brechungsindex der dritten Linse bei 587 nm G3 ist, wobei eine folgende Beziehung erfüllt ist: 0.7 < G2/G3 < 1.2.

11. Optisches System nach einem der Ansprüche 1 bis 10, wobei eine Zentrumsdicke der ersten Linse T1 ist, eine Zentrumsdicke der zweiten Linse T2 ist, und eine Zentrumsdicke der dritten Linse T3 ist, wobei folgende Beziehungen erfüllt sind: 0.2 < T3/T2 < 1 und 0.2 < T1/T2 < 1.

12. Optisches System nach einem der Ansprüche 1 bis 11,

wobei die erste Linse eine positive oder negative Brechkraft und eine konkave sensorseitige Oberfläche aufweist,
wobei die zweite Linse eine konvexe sensorseitige Oberfläche aufweist,
wobei eine Kante der objektseitigen Oberfläche der achten Linse weiter zu der ersten Linse hin vorsteht als ein Zentrum auf der optischen Achse der objektseitigen Oberfläche der achten Linse,
wobei eine gerade Linie, welche Kanten der objektseitigen Oberfläche der achten Linse verbindet, gleich einer geraden Linie ist, welche orthogonal zu der optischen Achse in einer Mitte zwischen einer objektseitigen Oberfläche und einer sensorseitigen Oberfläche der siebten Linse ist, oder sich näher an der ersten Linse befindet.

13. Optisches System nach Anspruch 12, wobei die gerade Linie, welche die Kanten der objektseitigen Oberfläche der achten Linse verbindet, sich näher an der ersten Linse befindet als eine gerade Linie, welche orthogonal zu der optischen Achse in einem Zentrum der objektseitigen Oberfläche der siebten Linse ist.

14. Optisches System nach einem der Ansprüche 1 bis 13, wobei ein Intervall zwischen der vierten Linse und der fünften Linse entlang der optischen Achse größer als ein erstes Intervall zwischen der ersten Linse und der zweiten Linse ist, wobei ein zweites Intervall zwischen der achten Linse und der neunten Linse entlang der optischen Achse größer als das erste Intervall ist.

15. Optisches System nach Anspruch 14, wobei die ersten und zweiten Intervalle 0.4 mm oder mehr sind,

wobei f2 eine Brennweite der zweiten Linse (112) ist, und f12 die kombinierte Brennweite der ersten Linse (111) und der zweiten Linse (112) ist, und
wobei die folgende Beziehung erfüllt ist: 0.5 < f2/f12 < 5.

## Revendications

1. Système optique comprenant :

une première lentille (111), une deuxième lentille (112), une troisième lentille (113), une quatrième lentille (114), une cinquième lentille (115), une sixième lentille (116), une septième lentille (117), une huitième lentille (118) et une neuvième lentille (119) qui sont disposées séquentiellement le long d'un axe optique (Lx) depuis un côté objet vers un côté capteur,
dans lequel la première lentille (111) présente une surface côté objet convexe,
dans lequel la deuxième lentille (112) a une puissance de réfraction positive et présente une surface côté objet convexe,
dans lequel la troisième lentille (113) a une puissance de réfraction négative et une surface côté capteur concave,
dans lequel la huitième lentille (118) a une puissance de réfraction positive, et au moins l'une d'une surface côté objet et d'une surface côté capteur de la huitième lentille présente au moins un point d'inflexion,
dans lequel la neuvième lentille (119) a une puissance de réfraction négative et une surface côté objet et une surface côté capteur de la neuvième lentille ont au moins un point d'inflexion, et
dans lequel une épaisseur centrale (T2) de la deuxième lentille (112) est supérieure à une épaisseur centrale de chacune des première et troisième à neuvième lentilles,
dans lequel le système optique comprend au plus neuf lentilles,

**caractérisé en ce que**
les indices de réfraction des troisième, sixième et huitième lentilles sont supérieurs aux indices de réfraction des première, deuxième, cinquième, septième et neuvième lentilles.

2. Système optique selon la revendication 1,
dans lequel l'épaisseur centrale de la deuxième lentille est comprise dans une plage de 2 à 4 fois l'épaisseur centrale de la troisième lentille.

3. Système optique selon la revendication 1 ou 2, dans lequel l'intervalle entre les axes optiques des huitième et neuvième lentilles adjacentes (118, 119) est supérieur à la somme des épaisseurs centrales des première et deuxième lentilles (111, 112).

4. Système optique selon l'une quelconque des revendications 1 à 3, dans lequel les nombres d'Abbe des première, deuxième, quatrième, cinquième, septième et neuvième lentilles sont supérieurs ou égaux à 50, et les nombres d'Abbe des troisième et sixième lentilles sont inférieurs à 30.

5. Système optique selon l'une quelconque des revendications 1 à 4, dans lequel les première, cinquième et septième lentilles ont une puissance de réfraction positive.

6. Système optique selon l'une quelconque des revendications 1 à 5, comprenant un capteur d'image d'un côté capteur de la neuvième lentille ; et un filtre optique entre le capteur d'image et la neuvième lentille,

dans lequel le système optique satisfait aux équations 1 et 2 :

$$[\text{Équation 1}]\ 0 < \text{BFL/TTL} < 0,3$$

$$[\text{Équation 2}]\ 0 < \text{BFL/Img} < 0,3$$

où **BFL** est une distance entre le centre de la surface côté capteur de la neuvième lentille et un capteur d'image, **TTL** est une distance entre un centre de la première surface côté objet de la première lentille et le capteur d'image, et Img est une distance verticale entre l'axe optique et 1,0F, qui est une extrémité diagonale sur le capteur d'image.

7. Système optique selon l'une quelconque des revendications 1 à 6, comprenant un capteur d'image d'un côté capteur de la neuvième lentille et un filtre optique entre le capteur d'image et la neuvième lentille,

dans lequel le système optique satisfait aux équations 3, 4 et 5 :

$$[\text{Équation 3}]\ 0,5 < \text{F/TTL} < 1,2$$

$$[\text{Équation 4}]\ 0,5 < \text{TTL/(Imgx2)} < 0,8$$

$$[\text{Équation 5}]\ 0,5 < \text{TTL/(D92x2)} < 1,2$$

où TTL est une distance entre le centre d'une première surface côté objet de la première lentille et le capteur d'image, F est une distance focale effective totale du système optique, Img est une distance verticale entre l'axe optique et 1,0F, qui est une extrémité diagonale sur le capteur d'image, et D92 est une distance entre le centre d'une surface côté capteur de la neuvième lentille et une extrémité d'une région effective sur l'axe optique.

8. Système optique selon l'une quelconque des revendications 1 à 7, dans lequel le rayon de courbure de la surface côté objet de la deuxième lentille est L2R1, et une valeur absolue d'un rayon de courbure d'une surface côté capteur de la deuxième lentille est définie comme |L2R2|, dans lequel la relation suivante est satisfaite : 0 < L2R1/L2R2 < 0,5.

9. Système optique selon l'une quelconque des revendications 1 à 8, dans lequel une valeur absolue d'un rayon de courbure d'une surface côté objet de la troisième lentille est |L3R1|, et un rayon de courbure de la surface côté capteur de la troisième lentille est L3R2, dans lequel la relation suivante est satisfaite : 0,2 < L4R2/|L4R1| < 1.

10. Système optique selon l'une quelconque des revendications 1 à 9, dans lequel un indice de réfraction de la deuxième lentille à 587 nm est G2 et un indice de réfraction de la troisième lentille à 587 nm est G3, dans lequel la relation suivante est satisfaite : 0,7 < G2/G3 < 1,2.

11. Système optique selon l'une quelconque des revendications 1 à 10, dans lequel une épaisseur centrale de la première lentille est **T1,** une épaisseur centrale de la deuxième lentille est T2 et une épaisseur centrale de la troisième lentille est T3, dans lequel les relations suivantes sont satisfaites : 0,2 < T3/T2 < 1 et 0,2 < T1/T2 < 1.

12. Système optique selon l'une quelconque des revendications 1 à **11,**

dans lequel la première lentille présente une puissance de réfraction positive ou négative et une surface côté capteur concave,
dans lequel la deuxième lentille présente une surface côté capteur convexe,
dans lequel un bord de la surface côté objet de la huitième lentille fait saillie vers la première lentille davantage qu'un centre situé sur l'axe optique de la surface côté objet de la huitième lentille,
dans lequel une ligne droite reliant les bords de la surface côté objet de la huitième lentille est identique à une ligne droite orthogonale à l'axe optique située à mi-chemin entre une surface côté objet et une surface côté capteur de la septième lentille, ou est située plus près de la première lentille.

13. Système optique selon la revendication 12, dans lequel la ligne droite reliant les bords de la surface côté objet de la huitième lentille est située plus près de la première lentille qu'une ligne droite orthogonale à l'axe optique à un centre de la surface côté objet de la septième lentille.

14. Système optique selon l'une quelconque des revendications 1 à 13, dans lequel un intervalle entre la quatrième lentille et la cinquième lentille le long de l'axe optique est supérieur à un premier intervalle entre la première lentille et la deuxième lentille,
dans lequel un deuxième intervalle entre la huitième lentille et la neuvième lentille le long de l'axe optique est supérieur au premier intervalle.

15. Système optique selon la revendication 14, dans lequel les premier et deuxième intervalles sont de 0,4 mm ou plus,

dans lequel f2 est une distance focale de la deuxième lentille (112), et f12 est la distance focale combinée de la première lentille (111) et de la deuxième lentille (112), et
dans lequel la relation suivante est satisfaite : 0,5 < f2/f12 < 5.

FIG. 1

FIG. 2

FIG. 3

FIG. 4

FIG. 5

FIG. 6

(A)     (B)     (C)

FIG. 7

Distortion Grid -

— Actual FOV
— Paraxial FOV

FIG. 8

TANGENTIAL     1.00 RELATIVE FIELD HEIGHT (42.18 °)     SAGITTAL

0.80 RELATIVE FIELD HEIGHT (35.99 °)

0.60 RELATIVE FIELD HEIGHT (28.51 °)

0.30 RELATIVE FIELD HEIGHT (15.30 °)

0.00 RELATIVE FIELD HEIGHT (0.000 °)

RAY ABERRATIONS (MILLIMETERS)

656.2725 NM
587.5618 NM
546.0740 NM
486.1327 NM
435.8343 NM

FIG. 9

(A)                    (B)                    (C)

FIG. 10

FIG. 11

FIG. 12

656.2725 NM
587.5618 NM
546.0740 NM
486.1327 NM
435.8343 NM

LONGITUDINAL
SPHERICAL ABER.

ASTIGMATIC
FIELD CURVES

DISTORTION

IMG HT

IMG HT

1.00

7.15

7.15

0.75

5.36

5.36

0.50

3.58

3.58

0.25

1.79

1.79

-0.050 -0.025 0.0 0.025 0.050
FOCUS (MILLIMETERS)

-0.2 -0.1 0.0 0.1 0.2
FOCUS (MILLIMETERS)

-5.0 -2.5 0.0 2.5 5.0
DISTORTION

(A)

(B)

(C)

FIG. 13

FIG. 14

TANGENTIAL

SAGITTAL

1.00 RELATIVE
FIELD HEIGHT
(42.17°)

0.025

-0.025

0.0125

-0.025

0.80 RELATIVE
FIELD HEIGHT
(36.05°)

0.025

-0.025

0.0125

-0.025

0.60 RELATIVE
FIELD HEIGHT
(28.55°)

0.025

-0.025

0.0125

-0.025

0.30 RELATIVE
FIELD HEIGHT
(15.32°)

0.025

-0.025

0.0125

-0.025

0.00 RELATIVE
FIELD HEIGHT
(0.000°)

0.025

-0.025

0.0125

-0.025

RAY ABERRATIONS (MILLIMETERS)

656.2725 NM
587.5618 NM
546.0740 NM
486.1327 NM
435.8343 NM

FIG. 15

1500

1510

1520

1530

**EP 4 261 583 B1**